# EUROPÄISCHE PATENTSCHRIFT

(11) **EP 3 660 991 B1**
(45) Veröffentlichungstag und Bekanntmachung des Hinweises auf die Patenterteilung: **17.07.2024**
(21) Anmeldenummer: 19205632.3
(22) Anmeldetag: 28.10.2019
(51) Int. Cl.: H02G 1/08, G02B 6/44, H02G 9/10

(54) **ANSCHLUSSGEHÄUSEVORRICHTUNG**
CONNECTION HOUSING DEVICE
DISPOSITIF DE BOITIER DE RACCORDEMENT

(30) Priorität: 29.11.2018 EP 18209245; 19.03.2019 DE 202019001267 U; 06.06.2019 DE 202019002446 U
(43) Veröffentlichungstag der Anmeldung: 03.06.2020
(73) Patentinhaber: Hauff-Technik GmbH & Co. KG, 89568 Hermaringen (DE)
(72) Erfinder: SCHEURING, Horst, 89542 Herbrechtingen (DE); SCHMID, Jörg, 89129 Langenau (DE); KURZ, Ralf, 89537 Giengen (DE)
(74) Vertreter: König Szynka Tilmann von Renesse Patentanwälte Partnerschaft mbB München

(56) Entgegenhaltungen:
- EP-A1- 0 924 832
- EP-A1- 3 139 458
- WO-A2-97/26574
- DE-A1- 1 949 694
- DE-A1- 102013 203 031
- DE-A1- 19 611 946
- DE-A1- 19 705 648
- JP-A- H06 118 253
- US-A1- 2001 043 839

## Beschreibung

Die vorliegende Erfindung betrifft eine Anschlussgehäusevorrichtung bzw. deren Verwendung zum Einbauen in den Boden und Bereitstellen einer Datenkabelanbindung.

Aus der US 2001/0043839 A1 ist die Nutzung eines bestehenden Abwasserrohrsystems für eine nachträgliche Datenkabel- insbesondere Glasfasererschließung bekannt. Dabei werden in den bestehenden Mannlöchern bzw. Einstiegsschächten Kabelgehäuse platziert. Ein solches Vorgehen wird auch in der EP 0 924 832 A1 beschrieben.

Aus der JP H06 118 253 A ist ein Glasfasernetz-Zugangspunkt in Form eines kleinen Schachtes bekannt, der aus mehreren aufeinandergesetzten Ringen aufgebaut ist.

Aus der WO 97/26574 A2 ist eine Kabel- bzw. Spleißmuffe bekannt, die derart in den Boden eingebaut wird, dass sie von oben zugänglich bleibt.

Aus der EP 3 139 458 A1 ist eine Dose zur Installation in Trockenbauwänden bekannt.

Aus der DE 1 949 694 A1 ist ein Unterflurverteiler für elektrische Kabel bekannt, der über eine Klappe zugänglich ist.

Aus der DE 10 2013 203 031 A1 ist eine Straßenkappe bzw. Schieberkappe bekannt, die oberhalb eines Absperrschiebers oder Unterflurhydranten in die Straße eingebaut wird und höhenverstellbar ausgeführt ist.

Aus der DE 197 05 648 A1 ist ein Unterflurbehälter bekannt, in dem eine Haubenmuffe mit Spleißkassetten für Glasfaserkabel angeordnet ist.

Aus der DE 196 11 946 A1 ist eine Straßenkappe bekannt, die höhenverstellbar ausgebildet ist und einen Zugang zu einem Schiebergestänge schafft.

Wie nachstehend im Einzelnen deutlich wird, richtet sich der vorliegende Gegenstand speziell auf das letzte Teilstück eines Datenkabelnetzes, nämlich die Anbindung des Nutzers/Verteilers bzw. Gebäudes an eine Datenkabel-Verzweigungsstelle. Bei dieser kann es sich insbesondere um einen Abzweig aus einem Strang handeln, der bspw. entlang einer Straße im Boden verläuft. Die vorliegend diskutierte Anschlussgehäusevorrichtung kann in einer solchen Situation zwischen dem Abzweig und dem Gebäude platziert werden, was dessen Erschließung, also Anbindung an das Datenkabelnetz vereinfachen kann. Dies ist Teil des Erfindungsgegenstands, wird jedoch im Folgenden vorab kurz umrissen, weil sich vor dem Hintergrund dieser Anwendung die Funktion der Anschlussgehäusevorrichtung besser nachvollziehen lässt.

In der Anwendung, die wie gesagt Erfindungsgegenstand ist, wird die Anschlussgehäusevorrichtung derart im Boden, bspw. im Bereich einer Straße platziert, dass der Gehäuseinnenraum nach Herstellung des Boden- bzw. Straßenaufbaus noch von oben zugänglich ist. Vor der Herstellung des Boden-/Straßenaufbaus, also vor dem Aufschütten eines im Zuge der Datennetzerschließung ausgehobenen Grabens, wird zwischen der Datenkabel-Verzweigungsstelle und dem Anschlussgehäuse ein Leerrohr verlegt. In einfachen Worten wird das Datenkabel bzw. das Leerrohr dafür also nicht direkt vom Abzweig zu einem jeweiligen Nutzer/Verteiler geführt, sondern über das Anschlussgehäuse. Dabei können sich je nach Anwendung unterschiedliche Vorteile ergeben, im Folgenden wird exemplarisch die Erschließung eines Wohngebäudes im Bestand diskutiert.

Wird die Datenanbindung im Bestand nachgerüstet, kann die Netzverlegung typischerweise für ganze Straßenzüge bzw. Orts- oder Stadtteile erfolgen. Es wird dann die Straße, bspw. der Gehweg, aufgegraben und z. B. ein Kabelstrang verlegt, von dem bei jedem anzuschließenden Haushalt ein Kabel abgezweigt wird (an einer jeweiligen Datenkabel-Verzweigungsstelle). Der straßenseitige Graben wird dann wieder verfüllt und die zuvor aufgebrochene Deckschicht wird wiederhergestellt.

Die Erfinder haben festgestellt, dass sich hierbei jedoch meist nur der kleinere Teil der Anwohner bzw. Eigentümer für eine Nachrüstung sofort entscheidet (typischerweise 1/3). Weitere Anschlüsse werden dann erst später, nach und nach angefragt. Hierfür muss dann jeweils erneut aufgegraben, also insbesondere die Deckschicht aufgebrochen und ein Abzweig zu dem jeweiligen Gebäude verlegt werden, was erheblichen Aufwand bedeutet. Es muss ferner bei jeder Nachbelegung der Bodenaufbau dann auch wiederhergestellt werden (insbesondere die Deckschicht/der Belag).

Demgegenüber bietet das erfindungsgemäße Vorgehen die Möglichkeit, bei den vorerst noch nicht angeschlossenen Gebäuden jeweils einen Zugangspunkt zu setzen. Es kann dann entweder sogar bereits das Datenkabel bis in den Zugangspunkt verlegt und dort (vorerst) verwahrt werden, oder es kann der Zugangspunkt zumindest über ein Leerrohr angebunden sein. Soll das Gebäude dann später (nach der eigentlichen Erschließung des Straßenzugs) doch noch angeschlossen werden, muss je nach Position des Zugangspunktes zumindest nicht der Gehweg/die Straße aufgegraben werden, mitunter ist auch gar kein Aufgraben notwendig (wenn der Zugangspunkt direkt am Gebäude sitzt, siehe unten im Detail).

Der vorliegenden Erfindung liegt das technische Problem zugrunde, eine vorteilhafte Anschlussgehäusevorrichtung als Gegenstand einer Verwendung anzugeben, mit welcher ein solcher Zugangspunkt geschaffen wird.

Dies wird erfindungsgemäß mit der Verwendung der Anschlussgehäusevorrichtung gemäß Anspruch 1 gelöst. Diese weist ein Anschlussgehäuse auf, das einen Gehäuseinnenraum begrenzt, der über eine Öffnung im Anschlussgehäuse zugänglich ist. Im Zuge der Verwendung wird das Anschlussgehäuse solchermaßen in den Boden eingebaut, dass die Öffnung oben liegt und der Gehäuseinnenraum nach Herstellung des Bodenaufbaus von oben zugänglich bleibt. Zuvor wird zwischen der Datenkabel-Verzweigungsstelle, also bspw. dem Abzweig aus dem Strang (siehe vorne), und dem Anschlussgehäuse entweder direkt das Datenkabel oder vorzugsweise ein Leerrohr verlegt, durch welches das Datenkabel später verlegt werden kann. Auch wenn das Anschlussgehäuse zunächst nur über das Leerrohr an die Datenkabel-Verzweigungsstelle angebunden ist, kann ein nachträgliches Anschließen des Nutzers/Verteilers, also bspw. des Gebäudes, deutlich vereinfacht sein. Durch das Leerrohr kann dann nämlich das Datenkabel nachträglich eingeschoben bzw. -blasen werden, z. B. von der Datenkabel-Verzweigungsstelle bzw. über diese.

Das Anschlussgehäuse weist in bevorzugter Ausgestaltung ein Formteil auf, dessen Seitenwand zumindest einen vertikalen Abschnitt des Gehäuseinnenraums horizontal begrenzt. An die Außenwandfläche dieser Seitenwand legt sich im Zuge des Einbaus das Bodenmaterial an, also bspw. Sand, Kies oder Schotter, siehe unten im Detail. Bei der vorliegenden Anschlussgehäusevorrichtung ist dieses Formteil aus einem Kunststoffmaterial vorgesehen. Dies mag im Vergleich zu einem von den Erfindern anfänglich alternativ angedachten Formteil aus Beton, also einem Betonring, zwar aufgrund der mitunter geringeren Stabilität zunächst nachteilig erscheinen. Die Erfinder haben jedoch festgestellt, dass das Kunststoffmaterial z. B. ein gutes Gestalten von Anschlussstellen ermöglicht, was in der Anwendung das Ansetzen des Datenkabels bzw. Leerrohres vereinfachen kann. Dies kann speziell dahingehend von Vorteil, dass in der Anwendung dann vielfach eine große Zahl Anschlussgehäuse unter hohem Zeitdruck (Erdarbeiten) installiert werden muss. Das Kunststoffmaterial kann vor diesem Hintergrund für ein Datenkabel bspw. auch weniger beschädigungsträchtig als Beton mit scharfen Kanten sein.

Bevorzugte Ausführungsformen sind Gegenstand der abhängigen Ansprüche sowie der gesamten Offenbarung, wobei bei der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Werden also bspw. die Vorteile der Anschlussgehäusevorrichtung in einer bestimmten Anwendung geschildert, ist dies auch als Offenbarung eines solchen Montageverfahrens bzw. einer entsprechenden Verwendung zu verstehen.

In bevorzugter Ausgestaltung wird zwischen der Datenkabel-Verzweigungsstelle und dem Anschlussgehäuse ein Leerrohr verlegt, dass dann unmittelbar anschließend oder auch später (Vorverlegung) der Führung bzw. dem Verlegen des Datenkabels dient. An dem Anschlussgehäuse ist zum Ansetzen des Leerrohres bevorzugt eine Anschlussstelle vorgesehen. Das angesetzte Leerrohr ist dort dann zumindest radial in Position gehalten, es kann also im Allgemeinen noch axial verschiebbar sein. In einem einfachen Fall kann die Anschlussstelle also bspw. ein Loch im Anschlussgehäuse sein, durch welches sich das Leerrohr einerseits einschieben lässt, wobei es aber darin andererseits radial lagefixiert ist (bezogen auf die Leerrohrachse). Das zumindest radiale Halten des Leerrohres an der Anschlussstelle kann z. B. hinsichtlich der anschließenden Herstellung des Bodenaufbaus von Vorteil sein, wenn bspw. Schüttgut um das Anschlussgehäuse herum verdichtet wird. Damit lässt sich z. B. einer Beschädigung bzw. einem Abknicken des Leerrohres vorbeugen.

Gemäß einer bevorzugten Ausführungsform ist die Anschlussstelle oberhalb eines unteren Endes des Gehäuseinnenraums angeordnet. Vereinfacht ausgedrückt mündet das Leerrohr somit nicht von unten in den Gehäuseinnenraum (nicht an dessen unterster Stelle), sondern etwas weiter oben. Anders ausgedrückt wird der Gehäuseinnenraum ein Stück weit nach unten gezogen, was bspw. aufgrund des vergrößerten Innenraums von Vorteil sein kann. Dieser kann bspw. in vertikale Bereiche unterteilt werden, sodass sich mit einem Anschlussgehäuse z. B. auch mehrere Nutzer/Verteiler erschließen lassen. Ein anderer Vorteil des nach unten gezogenen Anschlussgehäuses kann bspw. darin liegen, dass sich dieses dann bspw. auch direkt auf eine Tragplatte setzen lässt, also keine zusätzliche Aufstellvorrichtung erforderlich ist (der Positionierung der Tragplatte kann bspw. aus Gründen des Frostschutzes eine gewisse Mindesttiefe vorgegeben sein).

Das nach unten gezogene Anschlussgehäuse kann bspw. auch dahingehend von Vorteil sein, dass sich dessen Standfläche vertikal in etwa auf Höhe der Verlegetiefe der Leerrohre platzieren lässt. Damit muss dann im Bereich des Anschlussgehäuses bspw. nicht wesentlich weiter ausgegraben oder gesondert unterfüttert werden, sondern lässt sich das Anschlussgehäuse gemeinsam mit den Leerrohren ohne weitere Erdarbeiten platzieren.

In bevorzugter Ausgestaltung ist die Anschlussstelle an dem Anschlussgehäuse solchermaßen schräg orientiert, dass eine Mittenachse des angesetzten Leerrohres im Bereich der Anschlussstelle gewinkelt zur vertikalen Richtung liegt. Der mit der vertikalen Richtung eingeschlossene Winkel kann bspw. bei mindestens 10°, weiter und besonders bevorzugt mindestens 20° bzw. 30° liegen. Mögliche Obergrenzen können bspw. bei höchstens 80° bzw. 70° liegen. Betrachtet wird hierbei jeweils der kleinere von zwei Winkeln, den die Mittenachse des Leerrohres mit der vertikalen Richtung einschließt.

Das schräg, insbesondere schräg nach oben in das Anschlussgehäuses mündende Leerrohr kann bspw. dahingehend von Vorteil sein, dass sich das Datenkabel beim Einblasen weniger leicht im Anschlussgehäuse verfängt. Mit einer schräg nach oben orientierten Mittenachse wird es entsprechend bereits ein Stück weit nach oben gelenkt, also in Richtung der oben liegenden Öffnung. Ein schräg nach oben einmündendes Leerrohr kann bspw. auch dahingehend von Vorteil sein, dass die Anschlussstelle dann etwas oberhalb der Verlegetiefe des Leerrohres liegen kann und dieses bereits im Erdreich bzw. Bodenaufbau unter Einhaltung eines Mindestradius gekrümmt nach oben geführt werden kann. Die Anschlussstelle kann damit bspw. auch auf einer Höhe platziert werden, sodass sie von oben, durch die Öffnung des Anschlussgehäuses im Bedarfsfall noch gut zugänglich ist.

Generell beziehen sich "vertikal" und "horizontal" auf die Orientierung der Anschlussgehäusevorrichtung beim Montieren bzw. im montierten Zustand. Die vertikale Richtung kann insbesondere senkrecht zu einer Ebene liegen, in welcher eine Standfläche der Anschlussgehäusevorrichtung, insbesondere des Formteils (siehe unten) liegt. "Oben" bzw. "unten" beziehen sich auf die vertikale Richtung, und "seitlich" betrifft die horizontale Richtung; "nach innen" meint zum Gehäuseinneren hin, "nach außen" davon weg.

Gemäß einer bevorzugten Ausführungsform ist die Straßenkappe als Oberteil auf ein Formteil als Unterteil gesetzt. Das Unterteil begrenzt einen unteren Abschnitt des Gehäuseinnenraums, und das Oberteil (die Straßenkappe) begrenzt einen oberen Abschnitt des Gehäuseinnenraums.

Gemäß einer bevorzugten Ausführungsform bildet ein Fitting die Anschlussstelle, wird bzw. ist das erdverlegte Leerrohr also an das Fitting angesetzt. Das Fitting bildet bevorzugt eine gedichtete Anschlussstelle, ist also gegen das angesetzte Leerrohr gedichtet. Dazu kann es ein Dichtelement aufweisen, an welches das Leerrohr angesetzt wird, bevorzugt wird das Leerrohr eingeschoben. Nach dem Einschieben des Leerrohres kann bspw. mit einer Überwurfmutter, die auf- bzw. festgeschraubt wird, eine Arretierung und damit Auszugssicherung geschaffen werden (Schraubfitting). Bevorzugt weist das Fitting einen Arretierungsring mit Sperrzähnen auf, die sich an dem Leerrohr verkrallen und eine Auszugsicherung schaffen; bevorzugt kann zusätzlich ein Löseelement vorgesehen sein, bspw. eine Hülse, die sich einschieben lässt und die Sperrzähne aus der Verkrallung hebt. Besonders bevorzugt ist dann gar kein zusätzliches Verschrauben notwendig (Steckfitting). Generell ist ein "Fitting" also eine Anschlussstelle, an welcher das angesetzte Leerrohr auszugsicher gehalten ist (die zum Ausziehen notwendige Kraft kann bspw. mindestens das 2- oder 4-Fache der zum Ansetzen notwendigen Kraft sein, mit möglichen Obergrenzen bei z. B. höchstens dem 1000-, 500-, 100-bzw. 50-Fachen); das Fitting ist bevorzugt ein separates, an das Anschlussgehäuse angesetztes Teil.

Unabhängig von der Ausgestaltung im Einzelnen ist das Fitting bevorzugt in ein Loch in der Seitenwand des Formteils eingesetzt. Dieses Loch ist, wie nachstehend dargelegt, bevorzugt in einem Einbuchtungsbereich angeordnet, besonders bevorzugt an dessen oberem Ende, wo die Seitenwand schräg nach außen läuft. Dies kann z. B. über einen Stoffschluss (bspw. Verkleben) oder formschlüssig erreicht werden. Der verdrehsichere Sitz des Fittings kann bspw. die Montage des Datenkabels vereinfachen, nämlich das Abdichten des Fittings gegen das hindurchgeführte Datenkabel. Dies kann bevorzugt durch Anziehen einer Überwurfmutter erfolgen, wobei das Anschlussgehäuse bereits im Erdreich sitzt und der Monteur von oben durch die Öffnung an dem Fitting hantieren muss. Das verdrehsichere Fitting kann dann bspw. auch nur mit einer Hand betätigt und gegen das Datenkabel gedichtet werden, was die Handhabung erleichtern kann.

Im Allgemeinen kann das Fitting auch direkt in das Loch gesetzt sein und z. B. mit einem aufgeschobenen Sicherungsring axial in Position gehalten werden; das Fitting kann auch stoffschlüssig befestigt werden bzw. sein, z. B. eingeklebt. Bevorzugt ist das Fitting über einen Adapter in dem Loch montiert. Dabei wird bevorzugt zunächst das Fitting in den Adapter und dann der Adapter mit Fitting in das Loch gesetzt. In seiner Position in dem Loch hält der Adapter das Fitting dann axial formschlüssig, bevorzugt auch verdrehsicher (z. B. über eine zur Außenwandfläche des Fittings komplementäre Kontur). Im Allgemeinen könnte der Adapter in dem Loch auch verschraubt werden, also bspw. an seiner Außenwandfläche mit einem Gewinde versehen sein (das in ein Innengewinde des Lochs greift oder eine sich an die Gehäusewand anlegende Mutter trägt). Bevorzugt verrastet der Adapter axial formschlüssig in dem Loch, was eine besonders einfache und flexible Handhabung ermöglichen kann.

Im Allgemeinen kann das Datenkabel im Gehäuseinnenraum von dem Fitting weg auch frei liegen, also im Anschlussgehäuse nicht weiter in einem Hohl- bzw. Leerrohr geführt werden. In bevorzugter Ausgestaltung wird bzw. ist jedoch auch vom Gehäuseinnenraum her ein Leerrohr an das Fitting gesetzt, vorzugsweise eingeschoben. Bevorzugt ist auch an dieser Stelle ein Arretierungsring vorgesehen, siehe vorne. Zur Verlängerung im Gehäuseinneren kann bevorzugt ein Leerrohr mit gewellter Außenwandfläche angesetzt werden, dessen Außenwandfläche also in einem Axialschnitt betrachtet (Schnittebene beinhaltet Leerrohrachse) mit Erhebungen und Vertiefungen verläuft, also wellenförmig, wobei die Innenwandfläche bevorzugt komplementär dazu gewellt ist. Das gewellte Rohr kann einerseits das Datenkabel hinreichend schützen, andererseits ist es vergleichsweise flexibel und lässt sich deshalb auch gut in Überlänge vorsehen und im Anschlussgehäuse in Schleifen ablegen. Die Überlänge kann bspw. dahingehend von Vorteil sein, dass dann ein Kabelgehäuse bzw. Dichtbehälter, an welches/welchen das gewellte Leerrohr angeschlossen ist, ohne Demontage des gewellten Leerrohrs nach oben aus dem Anschlussgehäuse herausgenommen werden kann.

Bevorzugt weist das Form- bzw. Unterteil zusätzlich zu der Seitenwand auch eine Bodenwand auf, die den Gehäuseinnenraum nach unten begrenzt. Bevorzugt sind die Boden- und die Seitenwand monolithisch miteinander ausgebildet, also aus demselben, unterbrechungsfrei durchgehenden Material geformt. Im Allgemeinen kann es sich bspw. auch um ein Thermoformteil handeln, bevorzugt ist ein Spritzgussteil. Generell, also auch unabhängig von der Herstellungsweise des Formteils im Einzelnen, kann das Kunststoffmaterial z. B. Polyamid, Acrylnitril-Butadien-Styrol, Polypropylen oder Polycarbonat (auch geschäumt) sein; bevorzugt kann das Kunststoffmaterial auch faserverstärkt sein, z. B. mit Glasfasern.

Gemäß einer bevorzugten Ausführungsform sind mindestens zwei Anschlussstellen zum gehäuseaußenseitigen Ansetzen von Leerrohren am Anschlussgehäuse vorgesehen, bevorzugt in Form von Fittingen (siehe vorne). Die mindestens zwei Anschlussstellen sind bevorzugt derart angeordnet, dass sich die Mittenachsen der angesetzten Leerrohre im Gehäuseinnenraum allenfalls dezentral schneiden.

Die Mittenachsen der Leerrohre schneiden sich im Gehäuseinnenraum also entweder gar nicht oder zumindest nicht auf dessen Mittenachse, also der Mittenachse des Anschlussgehäuses. Sofern sie sich überhaupt im Gehäuseinnenraum schneiden, kann dies bspw. von der Mittenachse des Anschlussgehäuses weg in den äußeren 50 % des Gehäuseinnenraumradius erfolgen (also allenfalls dort).

Der Versatz zwischen den Mittenachsen der Leerrohre kann bspw. dahingehend von Vorteil sein, dass sich die Datenkabel und/oder gehäuseinnenseitig angesetzten Leerrohre dann gegenseitig weniger beeinträchtigen. Sie können bspw. jeweils für sich im Gehäuseinnenraum besser in Schleifenform abgelegt damit insbesondere auch in Überlänge vorgesehen werden. Die Mittenachsen der Leerrohre können bspw. vertikal zueinander versetzt sein, also in Höhenrichtung gestaffelt. Alternativ oder zusätzlich können sie jedoch auch in einer Aufsicht betrachtet (vertikal daraufblickend) zueinander versetzt sein, schneiden sie also die Mittenachse des Anschlussgehäuses nicht. Die zueinander versetzten Mittenachsen können bevorzugt jeweils tangential zu einer Innenwandfläche der Seitenwand in den Gehäuseinnenraum münden, was das schleifenförmige Ablegen vereinfachen kann.

Generell, unabhängig von dem Versatz der Leerrohr-Mittenachsen oder auch in Kombination damit, kann alternativ zu der vorstehend diskutierten Verkippung einer Anschlussstelle eine Ausgestaltung bevorzugt sein, bei welcher die Anschlussstelle im Wesentlichen horizontal ausgerichtet ist. Das angesetzte Leerrohr mündet dann also solchermaßen in den Gehäuseinnenraum, dass seine Mittenachse im Wesentlichen horizontal liegt. "Im Wesentlichen horizontal" meint bspw. um nicht mehr als 10°, 5° oder 2° gegenüber der Horizontalen verkippt, bevorzugt kann im Rahmen der technisch üblichen Genauigkeit eine exakte horizontale Ausrichtung (0°) sein. Ist die bzw. sind die Anschlussstelle(n) horizontal ausgerichtet, kann dies bspw. die im Zuge des Anschlussgehäuse-Einbaus auf die Anschlussstelle(n) wirkenden Zugkräfte verringern, insbesondere bei dickeren und dementsprechend schwereren Leerrohren. Ein horizontal angesetztes Leerrohr kann bspw. auch mit Bodenmaterial unterfüttert werden, lässt sich also auch vor Herstellung des Bodenaufbaus relativ gut abstützen. Die horizontale Ausrichtung kann bspw. auch die Stabilität des Aufbaus insofern verbessern, als das horizontal mündende im Vergleich zu einem von unten mündenden Leerrohr das Anschlussgehäuse weniger "anhebt", also die Standsicherheit vor dem Herstellen des Bodenaufbaus erhöht ist.

In bevorzugter Ausgestaltung ist die Seitenwand des Form- bzw. Unterteils in einem Einbuchtungsbereich horizontal nach innen versetzt. Dies kann bspw. hinsichtlich der Stabilität von Vorteil sein. In dem Einbuchtungsbereich kann die Seitenwand bspw. um mindestens 5 mm, 10 mm, 15 mm, 20 mm, 30 mm, 40 mm bzw. 50 mm nach innen versetzt sein, mit möglichen (davon unabhängigen) Obergrenzen bei z. B. höchstens 150 mm bzw. 120 mm.

Generell ist die Anschlussstelle bevorzugt am Form- bzw. Unterteil angeordnet, besonders bevorzugt in einem solchen Einbuchtungsbereich. Diese Positionierung kann bspw. aufgrund einer im Einbuchtungsbereich wegen der Konturierung höheren Stabilität von Vorteil sein. Bevorzugt erstreckt sich der Einbuchtungsbereich vertikal nur über einen Abschnitt des Form- bzw. Unterteils, läuft die Seitenwand also am oberen Ende des Einbuchtungsbereichs wieder nach außen. Dort ist bevorzugt die Anschlussstelle angeordnet und damit zugleich in der gewünschten Schrägstellung positioniert, weil dort die Seitenwand schräg nach außen läuft.

Gemäß einer bevorzugten Ausführungsform ist die Seitenwand in einem Ausbuchtungsbereich horizontal nach außen versetzt, bezüglich einer möglichen Quantifizierung wird auf die Angaben im vorletzten Absatz verwiesen. Bevorzugt bildet die Bodenwand des Form- bzw. Unterteils in dem Ausbuchtungsbereich eine Standfläche, auf welche das Form- bzw. Unterteil aufgestellt wird bzw. auf welche es gestellt werden kann. Konkret bildet die dem Gehäuseinneren abgewandte Außenfläche der Bodenwand die Standfläche. Mit dieser Standfläche könnte das Form- bzw. Unterteil im Allgemeinen auch direkt im Boden platziert werden, bspw. auf ein Schotterbett aufgesetzt werden. Bevorzugt wird das Form- bzw. Unterteil mit der Standfläche auf eine Tragplatte gesetzt (was ausdrücklich auch hinsichtlich einer entsprechenden Verwendung offenbart sein soll).

Als Tragplatte kann bspw. eine Betonplatte vorgesehen sein, bevorzugt ist jedoch eine Tragplatte aus Kunststoff. Es kann sich insbesondere um eine spritzgegossene Tragplatte handeln, also ein Spritzgußteil. Unabhängig davon im Einzelnen kann ein Vorteil des Form- bzw. Unterteils mit Standfläche bspw. darin liegen, dass es eben direkt aufgesetzt werden kann, also keine gesonderte Aufstellvorrichtung erforderlich ist. Kleinere Montagehilfsmittel, wie bspw. zwischen Bodenwand und Tragplatte angeordnete Unterlegscheiben, werden dabei nicht als Aufstellvorrichtung betrachtet (sie können bspw. einen Wasserabfluss aus dem Gehäuseinnenraum ermöglichen).

Insgesamt hat das Anschlussgehäuse bevorzugt eine (vertikale) Höhe von mindestens 40 cm bzw. 50 cm, mit möglichen (davon unabhängigen Obergrenzen bei z. B. höchstens 100 cm, 80 cm bzw. 70 cm. Das Form- bzw. Unterteil für sich hat bevorzugt eine Höhe von mindestens 15 cm bzw. 20 cm und (davon unabhängig) von z. B. höchstens 45 cm, 35 cm bzw. 30 cm.

In bevorzugter Ausgestaltung ist die Bodenwand des Form- bzw. Unterteils mit einem Loch versehen, vorzugsweise in dem Ausbuchtungsbereich. Dieses kann einerseits zur Montage an der Tragplatte genutzt werden, andererseits kann es zusätzlich oder alternativ auch dem Abführen von in den Gehäuseinnenraum eingedrungenem Wasser dienen. Wasser kann bspw. eindringen, wenn aufgrund eines Montagefehlers ein die oberseitige Öffnung verschließender Deckel nicht richtig platziert wird. Das Loch in der Bodenwand kann bspw. einen Durchmesser von höchstens 5 cm, 4 cm, 3 cm, 2 cm bzw. 1 cm haben, mit möglichen Untergrenzen bei z. B. mindestens 0,3 cm bzw. 0,5 cm.

In bevorzugter Ausgestaltung ist die Bodenwand des Form- bzw. Unterteils in einem mittleren Bereich nach vertikal oben versetzt, liegt sie dort also höher als in dem Ausbuchtungsbereich. Dies kann bspw. hinsichtlich der Stabilität von Vorteil sein, und/oder es kann mit nur in dem bzw. den Ausbuchtungsbereichen angeordneten Standflächen auch ein stabilerer Stand des Form- bzw. Unterteils erreicht werden. In Verbindung mit der im Ausbuchtungsbereich mit einem Loch versehenen Bodenwand kann die Erhöhung im mittleren Bereich bspw. das Abfließen des Wassers unterstützen. Der "mittlere Bereich" kann, bezogen auf eine vertikale Achse, bspw. radial innerhalb der Einbuchtungsbereiche liegen.

In bevorzugter Ausgestaltung folgen umlaufend mehrere Ein- und Ausbuchtungsbereiche abwechselnd aufeinander. Im Allgemeinen könnte bspw. auch über zwei Ausbuchtungsbereiche, die sich jeweils über einen etwas größeren Winkelbereich erstrecken, ein stabiler Stand erreicht werden. Bevorzugt gibt es mindestens drei Ausbuchtungsbereiche (die jeweils eine Standfläche bilden), mögliche Obergrenzen können bspw. bei höchstens acht bzw. sechs Ausbuchtungsbereichen liegen, besonders bevorzugt sind vier Ausbuchtungsbereiche, vgl. das Ausführungsbeispiel. Ferner gibt es dann eine der Zahl an Ausbuchtungsbereichen entsprechende Zahl Einbuchtungsbereiche (mindestens zwei bzw. drei, nicht mehr als acht bzw. sechs, besonders bevorzugt vier).

Wie bereits erwähnt, ist in bevorzugter Ausgestaltung auf das Form- bzw. Unterteil ein Oberteil gesetzt, besonders bevorzugt eine Straßenkappe. In bevorzugter Ausgestaltung ist die Straßenkappe als ein Oberteil auf ein solches Form- bzw. Unterteil gesetzt. Die Straßenkappe kann bspw. aus Metall vorgesehen sein, z. B. Druckguss, oder aus einem Kunststoffmaterial (Hartkunststoff), z. B. Polyamid, insbesondere Glasfaser-verstärkt, oder aus einem Copolymer-Material. Im Allgemeinen kann auch eine solche Straßenkappe aus einem Kunststoffmaterial das hauptanspruchsgemäße Formteil sein; offenbart sein soll ferner eine Variante, bei welcher eine Straßenkappe (egal ob aus Metall oder Kunststoffmaterial) zumindest einen Teil des Anschlussgehäuses bildet, also zumindest den oberen Abschnitt des Gehäuseinnenraums horizontal begrenzt.

Die Anschlussgehäusevorrichtung, die das Formteil als Unterteil und eine Stra-ßenkappe als Oberteil aufweist, wird dann derart in den Boden- bzw. Straßenaufbau integriert, dass eine Oberkante der Straßenkappe im Wesentlichen bündig mit der Oberkante des Schichtaufbaus liegt, also mit der Oberkante der Deckschicht im Falle des Straßenaufbaus. "Im Wesentlichen bündig" meint bspw. einen Versatz um weniger als 3 cm, 2 cm bzw. 1 cm. Im Rahmen der technisch üblichen Genauigkeit ist ein bündiger Einbau bevorzugt (0 cm).

Erfindungsgemäß ist eine höhenverstellbare Straßenkappe vorgesehen, deren vertikale Erstreckung sich also einstellen lässt. Dazu weist sie bevorzugt einen oberen Rohrabschnitt auf, der teleskopierbar geführt in einem unteren Rohrabschnitt angeordnet ist. Bei der Montage lässt sich der obere Rohrabschnitt in Anpassung an die Oberkante des Bodenaufbaus auf die gewünschte Höhe ausziehen bzw. einschieben.

Bevorzugt ist ein Arretiermittel vorgesehen, mit welcher sich die eingestellte Höhe, also vertikale Erstreckung der Straßenkappe arretieren lässt. Dies ist im vorliegenden Kontext, aufgrund der Nutzung des Gehäuseinnenraums zur Verlegung bzw. -bindung von Datenkabeln, von besonderer Bedeutung. So kann nämlich, auch wenn der Bodenaufbau noch nicht hergestellt ist, z. B. ein unbeabsichtigtes Hineinrutschen des oberen in den unteren Rohrabschnitt verhindert werden, was anderenfalls eine Beschädigung der Kabeltechnik zur Folge haben könnte. Im Allgemeinen könnte als Arretiermittel bspw. auch ein einsteckbarer Stift vorgesehen sein, bevorzugt ist ein Spannband, bspw. eine Spannschelle. Das Spannband wird auf einer Außenwandfläche des oberen Rohrabschnitts platziert und bildet im verspannten Zustand einen Anschlag für das Einschieben des oberen ins untere Rohrabschnitt. Bevorzugt ist bzw. wird das Spannband mittels einer rutschfesten Unterlage auf das Rohrabschnitt gesetzt, also z. B. auf einem Streifen aus einem Elastomermaterial, etwa Gummi. Ein solcher Streifen kann mit mehreren Schlitzen versehen sein, durch welche das Spannband zur Befestigung gefädelt ist.

Die hauptanspruchsgemä-ße "höhenverstellbare Straßenkappe", die insbesondere mit "Arretiermittel" vorgesehen sein kann, kann in Kombination mit einem aus einem Kunststoffmaterial geformten Formteil oder auch ohne ein solches vorgesehen sein. Erfindungsgemäß ist die Verwendung einer Anschlussgehäusevorrichtung nach Anspruch 1. Diese Verwendung umfasst das Bereitstellen einer Datenkabelanbindung für eine Datennutzer- oder Datenverteilerstelle, und zwar einer Anbindung an eine Datenkabel-Verzweigungsstelle, welche Anschlussgehäusevorrichtung ein Anschlussgehäuse aufweist, das einen Gehäuseinnenraum begrenzt, wobei der Gehäuseinnenraum von oben über eine Öffnung in dem Anschlussgehäuse zugänglich ist, und wobei das Anschlussgehäuse eine höhenverstellbare Straßenkappe ist, bzw. mit einem Arretiermittel bei welcher Verwendung das Anschlussgehäuse solchermaßen in einen Boden eingebaut wird, dass der Gehäuseinnenraum von oben über die Öffnung in dem Anschlussgehäuse zugänglich ist, wobei ferner ein Datenkabel oder ein Leerrohr für ein Datenkabel zwischen der Datenkabel-Verzweigungsstelle und dem Anschlussgehäuse verlegt wird, das also die Datenkabel-Verzweigungsstelle mit dem Anschlussgehäuse verbindet.

Gemäß einer bevorzugten Ausführungsform ist das Form- bzw. Unterteil an einem oberen Ende mit einem horizontal auskragenden Flansch vorgesehen, auf welchem die Straßenkappe aufsitzt. Die Straßenkappe könnte bspw. über eine Klammer befestigt oder mit dem Flansch verschraubt sein. Der Flansch kann also z. B. mit einem oder mehreren Löchern zum Einbringen von Schrauben oder Nieten, insbesondere Kunststoffnieten, vorgesehen sein.

Im Allgemeinen kann zwischen dem Ober- und dem Unterteil auch ein Zwischenteil angeordnet sein, dass einen mittleren Abschnitt des Gehäuseinnenraums horizontal begrenzt. Dies könnte also ein Ring sein, der bei Bedarf, wenn ein größerer Gehäuseinnenraum benötigt wird, zwischen Ober- und Unterteil gesetzt wird. Vorteilhaft kann insofern eine Ausgestaltung des Formteils dahingehend sein, dass dessen Boden über eine Sollbruchstelle austrennbar ist. Der eben geschilderte Aufbau lässt sich dann mit zwei Formteilen realisieren, wovon eines als Unterteil dient und das andere als Zwischenteil, wozu sein Boden mittels der Sollbruchstelle ausgetrennt wird. Darauf kommt das Oberteil. Bevorzugt ist jedoch eine Variante ohne Zwischenteil, besteht das Anschlussgehäuse also aus Unter- und Oberteil (die beiden begrenzen gemeinsam den gesamten Gehäuseinnenraum).

In bevorzugter Ausgestaltung ist das Oberteil, das den oberen Abschnitt des Gehäuseinnenraums horizontal begrenzt, auf das Formteil aufgesetzt und damit verrastet. Es schafft also ein Rastmittel einen Hinterschnitt bezogen auf die vertikale Richtung und hält die Teile zusammen. Bevorzugt ist das Rastmittel am Formteil ausgebildet, was aufgrund des Kunststoffmaterials gut möglich ist. Das Rastmittel kann bspw. ein sich vertikal erstreckender Steg mit einer Rastnase sein. Das Oberteil kann an seinem unteren Ende einen Flansch aufweisen, und das Rastmittel kann bspw. in eine Ausnehmung in dem Flansch eingreifen oder diesen seitlich umgreifen. Unabhängig von der Ausgestaltung im Einzelnen gibt es umlaufend bevorzugt mehrere Rastmittel, also mindestens 2, bevorzugt mindestens 3, mit möglichen (davon unabhängigen) Obergrenzen bei z. B. höchstens 8 bzw. 6.

An einer Auflagefläche, die das Formteil an seinem oberen Ende zum Aufsetzen des Oberteils bildet, kann ein Kragen vorgesehen sein, der den Flansch horizontal einfasst. Dies kann bspw. das Zusammensetzen vereinfachen, also den Flansch in seinen Rastsitz führen. Alternativ oder zusätzlich können an der Auflagefläche auch sich vertikal erhebende Stege vorgesehen sein, die sich an einer Innenwandfläche des Anschlussgehäuses abstützen und zusätzlich Stabilität schaffen.

Die Öffnung des Anschlussgehäuses, über welche der Gehäuseinnenraum auch nach Herstellung des Boden- bzw. Straßenaufbaus von oben zugänglich ist, wird bzw. ist bevorzugt mit einem reversibel herausnehm- und wiedereinsetzbaren Deckel verschlossen. Der Deckel kann sich bevorzugt ein Stück weit in die Öffnung hineinerstrecken, was einen sicheren Sitz gewährleisten kann. Es kann insbesondere ein verschließbarer Deckel vorgesehen sein, um einem unbefugten Zugang zu dem Gehäuseinneren vorzubeugen. Der Deckel lässt sich dann also nur mit einem speziellen Schlüssel öffnen. Bevorzugt kann eine Schraube zur Befestigung des Deckels einen Sonder-Schraubenkopf haben. Dieser lässt sich nur mit einem passenden Sonder-Bit betätigen, was eine Manipulationssicherheit schafft. Damit kann die Kabelinstallation im Gehäuseinnenraum sogar auch ohne zusätzlichen Schließmechanismus zuverlässig geschützt sein.

In bevorzugter Ausgestaltung ist der Deckel gegen des Anschlussgehäuse gedichtet. Im Allgemeinen könnte bspw. auch eine Dichtung angespritzt sein, bevorzugt ist ein Dichtelement eingelegt. Das Dichtelement ist aus einem Elastomermaterial vorgesehen und bildet eine umlaufende Dichtfläche zwischen dem Deckel und dem Anschlussgehäuse. Bevorzugt ist das Dichtelement in Form einer Matte vorgesehen, also als Scheibe (z. B. kreisrund oder rechteckig). Ein solches Dichtelement kann sich im Vergleich zu einer Ringstruktur besser handhaben lassen, zudem kann es mittig bspw. von dem eingehängten Dichtbehälter abgestützt werden. Die Erfinder haben festgestellt, dass ein Abdichten zwischen Deckel und Anschlussgehäuse auch dann von Vorteil sein kann, wenn das Anschlussgehäuse für sich nicht wasserdicht ausgeführt ist (z. B. Öffnungen im Bodenteil aufweist etc.). Die Dichtung an dieser Stelle beugt nämlich einem Eindringen von Oberflächenwasser und damit einem Einspülen von Verschmutzungen vor, z. B. von der Straße. Diese könnten vorliegend speziell mit Blick auf die Kabeltechnik von Nachteil sein.

Gemäß einer bevorzugten Ausführungsform wird der Deckel mittels einer selbstschneidenden Schraube an dem Anschlussgehäuse verschraubt. Dies kann im Vergleich zu einem Feingewinde bspw. hinsichtlich einer geringeren Verschmutzungsanfälligkeit von Vorteil sein. Wird der Deckel für Kabelarbeiten geöffnet, könnte Schmutz in das Feingewinde gelangen und dann das spätere Schließen erschweren bzw. schlimmstenfalls das Gewinde beschädigen.

Wie nachstehend im Einzelnen diskutiert, wird bzw. ist anspruchsgemäß ein Kabelgehäuse in dem Anschlussgehäuse angeordnet. In bzw. an dem Kabelgehäuse kann eine Verbindung mit einem weiteren Datenkabel hergestellt werden, etwa eine Spleiß- oder Steckverbindung. Bevorzugt kann ein Kabelgehäuse sein, in dessen Inneren eine Spleißverbindung hergestellt wird, über welche das Datenkabel mit einem Stecker verbunden ist. Im Innenraum des Kabelgehäuses kann es Mittel zum schleifenförmigen Ablegen und/oder Herstellen einer Auszugssicherung geben.

Im Allgemeinen kann das Kabelgehäuse bspw. auch für sich wasserdicht ausgeführt sein. Erfindungsgemäß wird bzw. ist das Kabelgehäuse in einen Dichtbehälter eingesetzt, nämlich einen topfförmigen Dichtbehälter. Bevorzugt wird bzw. ist das Kabelgehäuse in einen Dichtbehälter eingesetzt, besonders bevorzugt einen topfförmigen Dichtbehälter. Dieser hat also einen Boden und entgegengesetzt eine offene Seite (diese wird in das Kabelgehäuse eingesetzt) und wird bevorzugt mit dem Boden nach oben im Anschlussgehäuse platziert (im ortsfesten Koordinatensystem betrachtet). Der topfförmige Dichtbehälter ist also nach oben hin abgeschlossen, sodass das Kabelgehäuse in einem Luftvolumen gehalten ist, also auch bei ansteigendem Wasser trocken bleibt. Die Verwendung eines Dichtbehälters kann Flexibilität dahingehend schaffen, dass anwendungsabhängig unterschiedliche Kabelgehäuse eingesetzt werden können, die zudem für sich keine wasserdichten Spezialausführungen sein müssen (es können einfache Innenraumgehäuse verwendet werden).

Bevorzugt wird das Datenkabel im Gehäuseinnenraum in einem Leerrohr zu dem Dichtbehälter und/oder Kabelgehäuse geführt, dieses Leerrohr wird dann bevorzugt relativ zum Dichtbehälter lagefixiert. Gemäß einer bevorzugten Ausführungsform hat das Leerrohr zumindest abschnittsweise eine gewellte Außenwandfläche und/oder eine Spiralform. Bezüglich möglicher geometrischer Details des Leerrohres mit gewellter Außenwandfläche wird auf die vorstehenden Anmerkungen verwiesen, das gewellte Leerrohr kann aber auch unabhängig von der dort beschriebenen Befestigung mittels Befestigungsaufsatz von Interesse sein. Es kann sich nämlich besonders gut schleifenförmig ablegen lassen, sodass es umgekehrt mit einer gewissen Überlänge vorgesehen werden kann. Gleiches gilt für das Spiralrohr, das aus seiner Spiralform, die bspw. mittels einer Wärmebehandlung vorgegeben sein kann, ausgezogen werden kann und diese dann wieder selbsttätig einnimmt. Auch das Spiralrohr lässt sich besonders gut im Gehäuseinnenraum ablegen, kann also entsprechend eine Überlänge haben.

Generell wird das Leerrohr, mit dem das Kabelgehäuse und/oder der Dichtbehälter angeschlossen wird, in bevorzugter Ausgestaltung mit einer Überlänge vorgesehen. Bei einem solchen Leerrohr mit "Überlänge", das an dem Dichtbehälter und/oder Kabelgehäuse befestigt ist, können Montagearbeiten bevorzugt derart erfolgen, dass der Dichtbehälter und/oder das Kabelgehäuse mit daran befestigtem Leerrohr nach oben aus dem Anschlussgehäuse heraus genommen werden kann bzw. können. Es kann also bspw. der Dichtbehälter samt angesetztem Leerrohr herausgehoben und dann komfortabel, also nicht unter beengten Raumverhältnissen mit den eigentlichen Kabelarbeiten begonnen werden, was z. B auch einer Beschädigung des Datenkabels vorbeugen kann. Dieses ist beim Herausheben nämlich im Leerrohr geschützt. Das Leerrohr kann im Allgemeinen auch von der Datenkabel-Verzweigungsstelle weg ins Anschlussgehäuse hinein verlegt werden (mit Überlänge). Bevorzugt handelt es sich jedoch um ein Rohrstück, bevorzugt ein gewelltes Rohr und/oder Spiralrohr, das gehäuseinnenseitig an eine Anschlussstelle gesetzt wird, an welche gehäuseaußenseitig das von der Verzweigungsstelle kommende Leerrohr gesetzt wird (die Anschlussstelle kann z. B ein Fitting sein).

Das erfindungsgemäße Vorgehen ist nicht nur bei der eingangs diskutierten Erschließung im Bestand, sondern auch im Neubau von Vorteil. In einem Neubaugebiet mag es zwar auf den ersten Blick weniger aufwendig und kostengünstiger erscheinen, die einzelnen Gebäude bzw. Gebäudegrundflächen jeweils direkt anzuschließen, also das Datenkabel bzw. Leerrohr dafür von der Datenkabel-Verzweigungsstelle direkt bis zum Gebäude bzw. dessen Grundfläche zu verlegen. Die Erfinder haben jedoch festgestellt, dass der Baufortschritt auf den einzelnen Grundstücken in der Praxis erheblich divergieren kann, sodass einige Gebäude bspw. schon bezogen werden, während sich andere noch im Rohbaustadium befinden, wenn überhaupt. Der Netzbetreiber kann deshalb nicht in einem Zug das gesamte Gebiet erschließen, sondern wiederum nur nach und nach.

Das erfindungsgemäße Vorgehen eröffnet auch hier eine Möglichkeit der Vorverlegung, bspw. bis an das jeweilige Grundstück. Die Anschlussgehäuse können, wo später die Straße, insbesondere der Gehweg, verläuft platziert werden oder auf den Grundstücken, bspw. an den Grundstückgrenzen. Unabhängig von ihrer Position im Einzelnen kann der Netzbetreiber die einzelnen Datenkabel (für die einzelnen Gebäude bzw. Gebäudegrundflächen) dann in einem Zug bis in die Anschlussgehäuse verlegen, also in einem Arbeitsdurchgang (innerhalb eines Arbeitstages oder mehrerer zusammenhängender). Dieses Vorverlegen bis in die Anschlussgehäuse kann bspw. erfolgen, sobald der erste Haushalt seinen Datenanschluss erhält. Benötigen dann nach und nach die übrigen Haushalte ihren Datenanschluss, ist der Aufwand für die Verlegung dieser letzten Meter deutlich geringer als das Verlegen von der Datenkabel-Verzweigungsstelle aus bzw. über diese. Letzteres erfordert nämlich in der Regel mindestens zwei Techniker, die letzten Meter können auch von einem einzelnen Techniker verlegt werden.

Generell werden die Datenkabel bevorzugt von einem Knotenpunkt aus verlegt, an dem mehrere, also die einzelnen Datenkabelverzweigungsstellen zusammenlaufen. Von diesem Knotenpunkt kann sich z. B. ein Kabel- bzw. Leerrohrstrang entlang der Straße erstrecken (im Erdreich), wobei an den Gebäuden (bzw. allgemein Nutzern/Verteilern) jeweils ein Kabel/Leerrohr abgeht. An dem übergeordneten Knotenpunkt kann bspw. ein Verteilerkasten (Spleißkasten) oder eine Spleißmuffe angeordnet sein. Zwischen dem Knotenpunkt und den einzelnen Gebäuden (Nutzern/Verteilern) kann eine gewisse Wegstrecke liegen, und die Datenkabel werden in der Regel mit einem Spezialwerkzeug in die Leerrohre eingeblasen und damit über entsprechend große Strecken vorgeschoben. In dieser Hinsicht kann das vorstehend geschilderte Vorgehen, also das Vorverlegen vorerst nicht benötigter Datenkabel in einem Arbeitsgang, insoweit von Vorteil sein, als dann das entsprechende Spezialwerkzeug (Einblasvorrichtung) nur einmal an dem Knotenpunkt bereitgestellt werden muss. Die Arbeiten am Knotenpunkt können auch hinsichtlich der Kabelverbindung/-verzweigung dort Spezialwerkzeug erfordern, bspw. einen Kabelspleißer im Falle der bevorzugten Glasfaserkabel. Auch dieser muss dann nur einmal samt entsprechend geschultem Personal bereitgestellt werden, jedenfalls am Knotenpunkt (mitunter auch generell, vgl. insbesondere die Variante "Stecker").

Im Falle eines Gebäudes als Nutzer/Verteiler sitzt das im Boden angeordnete Anschlussgehäuse außerhalb der Gebäudegrundfläche, also außerhalb der von dem Gebäude eingenommenen Fläche inklusive der Wände, also der nach den Au-ßenmaßen genommene Brutto-Grundfläche. Diese kann kleiner sein als die überbaute Fläche (Dachüberstand). Das Anschlussgehäuse wird zwar außerhalb der Grundfläche platziert, kann jedoch durchaus innerhalb der überbauten Fläche liegen, bspw. im Falle eines direkt an der Gebäudeaußenwand platzierten Anschlussgehäuses. Letzteres kommt insbesondere bei einer Nachrüstung im Bestand in Betracht. Andererseits kann jedoch auch ein gewisser Mindestabstand zur Gebäudegrundfläche bevorzugt sein, bspw. von mindestens 1 m, 2 m bzw. 3 m. Mögliche Obergrenzen, die im Einzelnen auch von der Grundstücksgröße abhängen, können bspw. bei höchstens 50 m, 40 m, 30 m, 20 m, 15 m bzw. 10 m liegen.

Generell wird das Anschlussgehäuse in den Boden eingebaut, sodass die Öffnung nach Herstellung des Bodenaufbaus noch von oben zugänglich ist. Im fertig eingebauten Zustand liegt eine Oberkante des Anschlussgehäuses bevorzugt im Wesentlichen bündig mit einer Oberkante des Bodenaufbaus, bspw. um weniger als 3 cm, 2 cm bzw. 1 cm versetzt (im Rahmen der technisch üblichen Genauigkeit ist ein exakt bündiger Einbau bevorzugt, 0 cm). Bei dem Bodenaufbau kann es sich bei einer Platzierung im Gartenbereich z. B. um eine Mutterboden-/Humusschicht handeln, ebenso kann das Anschlussgehäuse in Schüttgut, wie z. B. Kies eingebettet werden. Ferner ist auch ein Eingießen möglich, kann um das Anschlussgehäuse herum also bspw. Beton aufgefüllt werden. Bevorzugt kann eine Positionierung des Anschlussgehäuses horizontal im Bereich einer Straße sein, sodass das Anschlussgehäuse mit dem Schichtaufbau der Straße vertikal fluchtend angeordnet ist. Ist die Straße fertiggestellt, sitzt das Anschlussgehäuse dann in dem Schichtaufbau der Straße (weil es zudem auf einer vertikalen Höhe innerhalb der fertigen Schichtaufbauhöhe platziert wird).

Der "Schichtaufbau" der Straße umfasst z. B. eine Tragschicht, wobei auch mehrere aufeinandergesetzte Tragschichten möglich sind. Das Baustoffgemisch der Tragschicht kann insbesondere Schotter umfassen, dieser wird verdichtet. Darauf kommt eine Deckschicht, bspw. Asphalt oder Platten bzw. Pflastersteine, im Allgemeinen ist jedoch bspw. auch eine ungebundene Deckschicht möglich (eine Schotterschicht im Falle eines Schotterwegs). Das Platzieren im Schichtaufbau der Straße ist bspw. insoweit von Vorteil, als diese Schicht(en) verdichtet ist bzw. sind, also eine gute mechanische Stabilität bieten. Dies kann im vorliegenden Zusammenhang von Interesse sein, weil die Datenkabel bzw. die vergleichsweise dünnen Leerrohre dafür relativ empfindlich sind (Beschädigungsgefahr bei Setzungen). Der Schichtaufbau der Straße wird definiert verdichtet, was z. B. mit einem dynamischen Plattendruckgerät und/oder einer Rammsonde (Gleichmäßigkeit der Verdichtung) überprüft werden kann (bzw. im Straßenbau überprüft wird) und dem Anschlussgehäuse zuverlässig Halt schafft.

Bei der Montage bzw. Herstellung des Schichtaufbaus der Straße wird dann also seitlich um das Anschlussgehäuse herum z. B. eine Schotterschicht verdichtet, etwa mit einer Rüttelplatte. Bevorzugt gibt es mehrere aufeinander gesetzte, also nacheinander hergestellte Schotterschichten, die jeweils um das Anschlussgehäuse herum verdichtet werden. Das Anschlussgehäuse ist dann, speziell nach Aufbringen der Deckschicht, definiert und stabil eingebaut. Der Begriff "Straße" umfasst hierbei sowohl die Fahrbahn als auch den Gehweg, weitere Bestandteile können ein Radweg und auch Mittel- bzw. Seitenstreifen (Überland/Autobahn) sein. Prinzipiell kann das Anschlussgehäuse bei einer Positionierung im Straßenbereich in jedem der genannten Bereiche platziert werden (im Bereich der Fahrbahn oder des Radwegs oder des Mittel-/Seitenstreifens oder des Gehwegs), bevorzugt ist bei einer üblichen Bebauung im örtlichen/städtischen Bereich eine Positionierung im Bereich des Gehwegs, besonders bevorzugt an der Grundstücksgrenze (am Straßenrand).

Mit Blick auf die bevorzugten Glasfaserkabel, die bestimmte minimale Biegeradien haben (Bruchgefahr), kann die Öffnung des Anschlussgehäuses bevorzugt gewisse Mindestmaße haben. Eine mittlere Öffnungsweite, die sich als Mittelwert der größten und kleinsten horizontalen Erstreckung der Öffnung ergibt und im bevorzugten Fall der Kreisform dem Kreisdurchmesser entspricht, kann bspw. bei mindestens 5 cm liegen, weiter und besonders bevorzugt mindestens 10 cm bzw. 12 cm. Mögliche Obergrenzen können (davon unabhängig) bspw. bei höchstens 40 cm, 30 cm bzw. 25 cm liegen. Der Deckel ist dann der Öffnung entsprechend bemessen.

Wie vorstehend dargelegt, können sich vielfältige Vorteile ergeben, wenn die "Datennutzer- oder -verteilerstelle" ein Gebäude ist, bspw. ein Büro- oder Wohngebäude, wobei sowohl ein Mehrfamilienhaus als auch insbesondere ein Einfamilienhaus infrage kommt. Bei der "Datennutzer- bzw. -verteilerstelle" kann es sich jedoch auch um eine Antennenstation bzw. -einheit handeln, bspw. für öffentliches WLAN. Eine solche Antenneneinheit kann für sich (freistehend) vorgesehen sein, sie kann aber bspw. auch Teil einer Straßenlaterne oder Ampel sein (angesetzt oder auch baulich integriert).

Im fertig montierten Zustand ist die Antenneneinheit dann mittels des Datenkabels über die Datenkabel-Verzweigungsstelle mit dem Knotenpunkt verbunden, über das Datenkabel werden Daten zu und auch von der Antenneneinheit übertragen, diese setzt das drahtgebundene Signal in ein Funksignal um. Dies kann auch ein Mobilfunksignal sein, es kann sich bei der Datennutzer- oder -verteilerstelle also bspw. auch um eine Mobilfunkstation handeln (z. B. für 5G). Eine solche Datennutzer- bzw. -verteilerstelle kann auch ein Technikgebäude umfassen, durch welches das Datenkabel geführt wird. Das Anschlussgehäuse wird dann außerhalb dieses Technikgebäudes platziert, vgl. die vorstehenden Anmerkungen.

Prinzipiell können sich bei der Anwendung "Antenneneinheit bzw. -station" dieselben Vorteile ergeben, wie vorstehend anhand der Gebäude geschildert. Wird bspw. ein Ortsteil bzw. Straßenzug erschlossen (die Straße aufgegraben und ein Leerrohrstrang verlegt, vgl. im Detail die vorstehenden Anmerkungen zum "Bestand"), ist nicht nur für die Büro-/Wohngebäude eine Vorverlegung möglich, sondern bspw. auch zur Errichtung eines öffentlichen WLAN-Netzes. Dazu kann ein jeweiliges Anschlussgehäuse bspw. an, also neben einer Laterne platziert werden, bevorzugt direkt neben dem Laternenpfosten bzw. einem Sockel. Die Laterne kann dann später für die Antenneneinheit eine Halterungsfunktion übernehmen, zudem ist dort auch Stromanschluss verfügbar (für den Umsetzer bzw. Konverter). Es können aber auch andere Stellen entlang der Straße, als spätere Antennenposition veranlagt werden. Durch ein entsprechendes Platzieren von Anschlussgehäusen entlang der Straße, bspw. bei jeder oder jeder n-ten Laterne, kann ein Aufbau eines solchen WLAN-Netzes veranlagt werden. Es muss dann später nicht nochmals gesondert aufgegraben werden, vgl. die vorstehenden Anmerkungen. Auch wenn der Aufbau des WLAN-Netzes bereits beschlossen ist, können die z. B. bei den Laternen oder auch anderen Stellen entlang der Straße platzierten Anschlussgehäuse das Prozedere vereinfachen. Analog der vorstehenden Schilderung können die Datenkabel nämlich in einem Arbeitsgang vom Knotenpunkt zu den einzelnen Anschlussgehäusen verlegt werden, die eigentliche Montage, z. B. an den einzelnen Laternen, kann dann nach und nach erfolgen.

Wie bereits erwähnt wird zwischen der Datenkabel-Verzweigungsstelle und dem Anschlussgehäuse bevorzugt ein Leerrohr verlegt, das dann bspw. als Option zunächst unbelegt bleiben oder gleich zum Verlegen des Datenkabels genutzt werden kann. Das Leerrohr kann bspw. einen Außendurchmesser von höchstens 30 mm, 25 mm, 20 mm bzw. 15 mm haben (eine mögliche Untergrenze kann bspw. bei mindestens 7 mm bzw. 10 mm liegen). Bei einer Wandstärke von 1-2 mm steht ein Innenquerschnitt zur Verfügung, in dem das Datenkabel gut geführt ist. Das Leerrohr ist bevorzugt aus einem Kunststoffmaterial vorgesehen. Wird der Bodenaufbau hergestellt, legt sich das Bodenmaterial bevorzugt direkt an eine Außenmantelfläche des Leerrohres an, berührt es diese also.

Generell wird das Leerrohr auf einer Höhe innerhalb der fertigen Schichtaufbauhöhe der Straße bzw. des Bodens verlegt, also unterhalb der Oberkante der fertigen Deckschicht (Pflaster/Platten bzw. Asphalt). Es kann bspw. mindestens 10 cm, 20 cm, 30 cm bzw. 40 cm unterhalb letzterer verlaufen, mit möglichen Obergrenzen bei höchstens 1,5 m, 1,2 m bzw. 1 m. Bevorzugt liegt das Leerrohr über die gesamte Strecke zwischen Datenkabel-Verzweigungsstelle und Anschlussgehäuse im Erdreich, also unterhalb der Oberkante des Schichtaufbaus.

Wenn das Leerrohr belegt wird, kann das Datenkabel bspw. mit einer Überlänge in das Anschlussgehäuse verlegt werden. Im fertig in das Anschlussgehäuse verlegten Zustand soll z. B. dann ein Endabschnitt des Datenkabels eine Länge von mindestens 1 m haben, wobei mindestens 2 m, 3 m, 4 m, 5 m, 6 m, 7 m, 8 m, 9 m bzw. 10 m weitere bevorzugte Untergrenzen sind. Mögliche Obergrenzen können bspw. höchstens 30 m, 20 m bzw. 15 m liegen. Konkret wird diese Länge zwischen der Eintrittsstelle, an welcher das Datenkabel aus dem Leerrohr in das Gehäuseinnere eintritt, bis zum Ende des Datenkabels genommen (dem Ende, das außerhalb des Leerrohres liegt, das also in einer Richtung von der Datenkabel-Verzweigungsstelle zu dem Anschlussgehäuse liegt).

Bei einer Variante kann die Überlänge, also der Endabschnitt, dann vorübergehend in dem Anschlussgehäuse, also im Gehäuseinneren abgelegt werden. Dazu wird der Endabschnitt bevorzugt in Schleifenform gebracht, womit sich zuverlässig minimale Biegeradien nicht unterschreiten lassen. Stege bzw. Haken, deren Abstand zueinander die Größe der Schleifenform vorgibt, können bspw. in einem Dichtbehälter und/oder einem Kabelgehäuse vorgesehen sein. Eine entsprechende Halterung für die Schleife kann aber bspw. auch an der Gehäuseinnenwand des Anschlussgehäuses selbst vorgesehen sein, ebenso ist eine herausnehm- und wiedereinsetzbare Kassette möglich.

Bevorzugt wird die Öffnung des Anschlussgehäuses nach dem schleifenförmigen Ablegen des Endabschnitts verschlossen, wird also der Deckel auf- bzw. eingesetzt. Wird das Datenkabel nur kurzzeitig abgelegt und bspw. noch am selben Arbeitstag weiter zum Gebäude bzw. Nutzer/Verteiler verlegt, kann auch ein schleifenförmiges Ablegen ohne Verschließen des Deckels Vorteile bieten, kann das Datenkabel nämlich in dem Gehäuseinneren etwas geschützt sein.

Die Verlegung zwischen Anschlussgehäuse und Gebäude bzw. Nutzer/Verteiler erfolgt bevorzugt ebenfalls im Erdreich, besonders bevorzugt wird hierfür zunächst wiederum ein Leerrohr (Anschluss-Leerrohr) verlegt, durch welches dann das Datenkabel geschoben werden kann. Bezüglich bevorzugter Details des "Anschluss-Leerrohres" wird auf die vorstehende Offenbarung zum "Leerrohr" verwiesen. Im Zuge einer Nachbelegung muss hierfür zwar ggf. nochmals ausgegraben werden, allerdings nur auf dem Grundstück, nicht im öffentlichen Raum (Gehweg/Straße), was einen entsprechend geringeren Aufwand bedeutet. Ist das Anschlussgehäuse direkt an der Außenwand platziert, muss mitunter auch gar kein Anschluss-Leerrohr verlegt werden, sondern kann der mit Überlänge im Anschlussgehäuse vorgehaltene Endabschnitt direkt in das Gebäude hinein verlegt werden (durch dessen Außenwand hindurch).

Generell kann das Datenkabel bzw. der Endabschnitt auch derart von dem Anschlussgehäuse zum Gebäude verlegt werden, dass das Ende des Endabschnitts dann im Gebäude liegt. Dort liegt also der Abschlusspunkt der Linientechnik. In diesem Fall erstreckt sich das Datenkabel dann unterbrechungsfrei von diesem im Gebäudeinneren über das Anschlussgehäuse zu der Datenkabel-Verzweigungsstelle (in der Regel über diese hinaus bis zu einem Knotenpunkt). "Unterbrechungsfrei" meint insoweit ohne Verbindungstelle dazwischen (insbesondere ohne Spleißstelle). Dieses Vorgehen kann bspw. insoweit von Vorteil sein, als dann in dem Anschlussgehäuse keine "komplexeren" Arbeiten am Datenkabel erforderlich sind, also bspw. kein Spleißgerät zu dem Anschlussgehäuse geschafft werden muss. Das Kabelgehäuse wird dann bspw. nur temporär zum Ablegen einer Überlänge genutzt.

Bei einer alternativ bevorzugten Ausführungsform wird das Anschlussgehäuse genutzt, um dort eine Verbindungsstelle herzustellen. Das Datenkabel, das sich von der Datenkabel-Verzweigungsstelle bis in das Anschlussgehäuse erstreckt, kann dort ebenfalls eine gewisse Überlänge haben, bspw. von mindestens 0,5 m, 1 m bzw. 1,5 m, was das Arbeiten vereinfachen kann. Die Überlänge wird dann jedoch typischerweise geringer als im vorherigen Beispiel sein, sie kann z. B. höchstens 5 m, 4 m, 3 m bzw. 2 m betragen.

Wird das Gebäude bzw. der Nutzer/Verteiler tatsächlich angeschlossen, wird dann zwischen dem Gebäude (Nutzer/Verteiler) und dem Anschlussgehäuse ein weiteres Datenkabel verlegt, bevorzugt in einem Anschluss-Leerrohr (vgl. insofern die vorstehenden Anmerkungen). Dieses weitere Datenkabel wird dann mit dem Datenkabel (das von der Datenkabel-Verzweigungsstelle kommt) verbunden, was im Allgemeinen bspw. auch durch Spleißen erfolgen kann. Als Verbindungsort dient bevorzugt das Kabelgehäuse. "Verbinden" ist in diesem Zusammenhang auf das Herstellen einer funktionalen Verbindungsstelle zu lesen, über welche hinweg Daten übertragbar sind. Allgemein können die vorliegend in Rede stehenden Daten insbesondere Internetdaten sein, was auch Telekommunikationsdaten wie E-Mail etc. und Telefonie (VOIP) umfasst, ebenso auch Fernseh- bzw. allgemein Unterhaltungsdaten. Wie verschiedentlich erwähnt, ist das Datenkabel bevorzugt ein Glasfaserkabel, welches eine einzige oder bevorzugt mehrere Glasfasern aufweisen kann. Beim Verbinden wird im Falle mehrerer Glasfasern dann jeweils eine Glasfaser des einen Datenkabels mit einer Glasfaser des anderen Datenkabels verbunden.

Bei einer bevorzugten Ausführungsform ist zum Verbinden des Datenkabels, das von bzw. über die Datenkabel-Verzweigungsstelle kommt, und jenem für den Gebäudeanschluss ein Stecker vorgesehen, vorzugsweise am Kabelgehäuse. Das erstgenannte Datenkabel kann dann bspw. vom Netzbetreiber verlegt werden, bevorzugt zunächst ohne Stecker, was das Einschieben/Einblasen vereinfacht bzw. ermöglicht. Das Datenkabel wird dann also ohne Stecker am Ende durch das Leerrohr verlegt, bevorzugt über die Datenkabel-Verzweigungsstelle in Richtung des Anschlussgehäuses (insbesondere durch Einblasen von einem Knotenpunkt aus, siehe vorne). Anschließend wird das in das Anschlussgehäuse verlegte Ende für die Steckverbindung vorbereitet, wird also bspw. ein Stecker angespleißt (der dann an/in dem Kabelgehäuse angeordnet ist).

Das weitere Datenkabel, das zwischen Anschlussgehäuse und Nutzer/Verteiler bzw. Gebäude verlegt wird, ist bevorzugt an einem oder auch beiden Enden mit einem Stecker bzw. Aufsatz zum Ansetzen eines Steckers vorkonfektioniert. An einem vorkonfektionierten Ende lässt sich der Stecker dann ohne besonderes Spezialwerkzeug, insbesondere ohne Spleißgerät, zusammensetzen, exemplarisch wird auf die EP 2 482 109 A2 bzw. das Produkt DiaLink von Diamond verwiesen. Das vorkonfektionierte Ende lässt sich ohne das angesetzte Steckerteil gut durch das Anschluss-Leerrohr verlegen, danach wird das Steckerteil aufgesetzt und kann die Steckverbindung mit dem Datenkabel hergestellt werden (dies ist bspw. der Ablauf beim Einschieben des weiteren Datenkabels vom Gebäudeinneren her). Das weitere Datenkabel kann jedoch auch vom Anschlussgehäuse her eingeschoben werden, das Ende mit dem abnehm- und aufsetzbaren Steckerteil wird dann also ins Gebäudeinnere geschoben und dort zusammengesetzt. Das in dem Anschlussgehäuse angeordnete Ende kann in diesem Fall auch mit einem fertigen Stecker ausgestattet sein.

Generell wird das Leerrohr und/oder das Anschluss-Leerrohr zum Gehäuseinnenraum hin bevorzugt gedichtet. Ist durch das entsprechende Leerrohr ein Datenkabel verlegt, kann bspw. ein Dichtelement mit einer entsprechenden Durchlassöffnung vorgesehen sein (dieses dichtet gegen das Kabel und gegen das Leerrohr), bspw. als Teil eines Fittings. Ist noch kein Datenkabel verlegt, kann das Leerrohr z. B. mit einem Blindstopfen bzw. -verschluss verschlossen sein. Das Abdichten der Leerrohre kann bspw. einem Wassereintritt (zum Gebäude oder Knotenpunkt hin) vorbeugen oder auch eine Barriere für Schleichgas darstellen. Speziell in Verbindung mit der vorstehend geschilderten "Auszugsicherung" kann das Abdichten die Sicherheit erhöhen, weil damit einem Verrutschen bzw. -setzen des Leerrohres vorgebeugt wird, bei dem sich die Abdichtung des Leerrohres lösen könnte. Besonders bevorzugt kann eine Integration der Leerrohr-Abdichtung in die Anschlussstelle sein, wird dort also das Leerrohr angesetzt und gehalten, sowie zugleich gedichtet (nicht bzw. nicht nur an der Außenwandfläche, sondern auch der Innenraum) z. B. mit einem Fitting.

Bei einer bevorzugten Ausführungsform weist das Anschlussgehäuse eine Führungsvorrichtung auf, um ein von der Datenkabel-Verzweigungsstelle her eingeschobenes Datenkabel nach oben durch die Öffnung aus dem Anschlussgehäuse herauszuführen. Diese Führungsvorrichtung schließt an die Eintrittsstelle an, an welcher das Datenkabel in den Gehäuseinnenraum gelangt. Sie ist bevorzugt in ihrer Position am Anschlussgehäuse festgelegt, bspw. angeformt oder befestigt. Sie ist bevorzugt an der Anschlussstelle befestigt an welche gehäuseaußenseitig das Leerrohr gesetzt ist, vorzugsweise an dem Fitting. Die Führungsvorrichtung kann einen Kanal begrenzen, in dem das Ende des Datenkabels beim Einschieben in den Gehäuseinnenraum nach oben geführt wird. Dieser Kanal kann im Allgemeinen auch offen sein, bspw. eine U- bzw. V-Form haben, er kann jedoch auch von einem kurzen Rohrstück gebildet sein, bspw. einem Wellrohrstück. Als Führungsvorrichtung kann im Allgemeinen auch ein Leitblech oder dergleichen vorgesehen sein, funktional soll das Ende des Datenkabels entlang der Führungsvorrichtung nach oben gelenkt werden. Die Führungsvorrichtung kann damit einem Verfangen des Datenkabels im Gehäuseinneren bzw. Öffnungsrand etc. vorbeugen, also eine Beschädigung vermeiden helfen. Bevorzugt ist die Führungsvorrichtung im Gehäuseinnenraum auf das Fitting der Anschlussstelle aufgesteckt oder eingesteckt.

Wie bereits erwähnt, liegt die Datenkabel-Verzweigungsstelle bevorzugt an einem Leerrohrstrang, bildet sie nämlich einen Abzweig davon. Der Leerrohrstrang erstreckt sich entlang mehrerer Nutzer- bzw. Verteilerstellen. Im Falle der Antennenstationen bzw. -einheit passiert der Leerrohrstrang mehrere solche Einheiten bzw. Stationen. Im Falle der Gebäude erstreckt er sich entlang mehrerer Gebäudegrundflächen, die bereits bebaut sein können (Bestand) oder bebaut werden (Neubaugebiet). Der Leerrohrstrang wird typischerweise in einem Graben verlegt, der dann aufgefüllt wird; er kann sich insbesondere entlang einer Straße erstrecken, z. B. am Straßenrand (bspw. unter dem Gehweg). Der Strang kann z. B. in Form eines Bündels durchgehender Leerrohre vorgesehen sein, wobei zur Herstellung eines jeweiligen Abzweigs jeweils ein durchgehendes Leerrohr aufgetrennt und aus dem Strang abgezweigt wird. Das mit dem Auftrennen geschaffene Ende wird dann bevorzugt an bzw. in das Anschlussgehäuse geführt. Der andere mit dem Auftrennen gebildete Rohrabschnitt kann z. B. ungenutzt in dem Bündel verbleiben.

Unabhängig von diesen Details ist im Falle des Leerrohrstranges eine "Verzweigungsstelle" dann z. B. jener Punkt, von dem weg sich das Leerrohr nicht mehr parallel zum Strang erstreckt, sondern in einer Krümmung zum Anschlussgehäuse hin verläuft. Ein Abstand zwischen Datenkabel-Verzweigungsstelle und Anschlussgehäuse kann bspw. höchstens 15 m, 10 m, 5 m bzw. 3 m betragen, mögliche Untergrenzen können (davon unabhängig) bei z. B. mindestens 0,5 m bzw. 1 m liegen.

Im Bestand kann bei der Erschließung dann bei einem oder auch mehreren der Gebäude direkt ein Leerrohr von der jeweiligen Datenkabel-Verzweigungsstelle zum Nutzer/Verteiler verlegt werden, also ohne Anschlussgehäuse dazwischen. So kann für jene Haushalte bzw. Eigentümer vorgegangen werden, die sich bereits bei der Erschließung für einen entsprechenden Datenanschluss entscheiden. Bei jenen Gebäuden, für die (vorerst) kein Datenanschluss gewünscht ist, wird jeweils ein Anschlussgehäuse platziert (und über ein Leerrohr von der Datenkabel-Verzweigungsstelle angeschlossen). Prinzipiell könnten dabei mehrere Gebäude auch über ein gemeinsames Anschlussgehäuse zusammengefasst werden (z. B. zwei Gebäude), oder es wird jedem Gebäude ein eigenes Anschlussgehäuse zugeordnet. Bezüglich der Möglichkeiten zur Platzierung des Anschlussgehäuses (direkt an der Gebäudegrundfläche oder an der Grundstücksgrenze etc.) wird auf die vorstehenden Ausführungen verwiesen, gleiches gilt für die Möglichkeiten der Vorbereitung der Nachbelegung (Endabschnitt in Schleifenform im Gehäuseinneren vorgehalten, Stecker oder auch vorerst nur Leerrohranbindung).

Gemäß einer bevorzugten Ausführungsform liegt die Verzweigungsstelle also an einem Leerrohrstrang, der sich entlang mehrerer Datennutzer- oder Datenverteilerstellen erstreckt, wobei zu einem Teil der Datennutzer- oder Datenverteilerstellen ein jeweiliges Leerrohr direkt zwischen einer jeweiligen Datenkabel-Verzweigungsstelle an dem Leerrohrstrang und der Datennutzer- oder Verteilerstelle verlegt wird, und wobei bei einem anderen Teil der Datennutzer- oder Datenverteilerstellen ein jeweiliges Anschlussgehäuse platziert wird und zwischen einer jeweiligen Datenkabel-Verzweigungsstelle an dem Leerrohrstrang und dem jeweiligen Anschlussgehäuse ein jeweiliges Leerrohr für ein jeweiliges Datenkabel verlegt wird.

Im Neubaugebiet werden bevorzugt sämtliche Anschlüsse über ein Anschlussgehäuse geführt, es kann bspw. für jedes Gebäude ein eigenes Anschlussgehäuse vorgesehen werden oder es können auch mehrere Gebäude demselben Außengehäuse zugeordnet werden (bevorzugt zwei Gebäude je Anschlussgehäuse). Mit Blick auf die noch folgenden Bauarbeiten wird dieses dann bevorzugt an der Grundstücksgrenze platziert (auf der Straße oder auf dem Grundstück). Vorteilhaft kann z. B. ein Positionieren des Anschlussgehäuses am Randstein sein, weil dieser auch in einem sehr frühen Ausbaustadium bereits einen Bezugspunkt definieren kann. Das "am Randstein" positionierte Anschlussgehäuse kann z. B. auf denselben Unterbau bzw. dieselbe Tragschicht wie der Randstein gesetzt werden, also bspw. auf dieselbe verdichtete Schotterschicht. Bevorzugt wird eine den Randstein einfassende Betonfüllung genutzt, um das Anschlussgehäuse horizontal und/oder vertikal einzubetten oder ein Fundament zu schaffen, auf welches das Anschlussgehäuse aufgesetzt wird. Den Rand- bzw. Bordstein kann diese Betonfüllung nach vertikal unten und/oder horizontal einfassen, z. B. als Fundament und Rückenstütze. Eine Positionierung an der Grundstücksgrenze, insbesondere am Randstein, kann nicht nur im Neubau, sondern auch im Bestand von Interesse sein.

Bei der Erschließung im Neubau kommen prinzipiell sämtliche vorstehend diskutierten Verlegetechniken (zwischen Anschlussgehäuse und dem dann errichteten Gebäude) in Betracht; im Anschlussgehäuse kann dann der Endabschnitt schleifenförmig abgelegt werden oder die Anbindung über eine Verbindungsstelle erfolgen, bspw. über einen Stecker vorbereitet werden. Von dem Knotenpunkt aus können die einzelnen Datenkabel jedenfalls in einem Arbeitsvorgang zu den unterschiedlichen Anschlussgehäusen verlegt werden. Bei einer Positionierung an der Grundstücksgrenze oder auch auf dem Grundstück muss dann bei einer nachträglichen Belegung der Gehweg/die Straße nicht nochmals aufgegraben werden.

Gemäß einer bevorzugten Ausführungsform "Neubau" liegt die Datenkabel-Verzweigungsstelle an einem Leerrohrstrang, der sich entlang mehrerer Datennutzer- oder Datenverteilerstellen erstreckt, nämlich entlang mehrerer Gebäude bzw. Gebäudegrundflächen, wobei jeder Gebäudegrundfläche ein Anschlussgehäuse zugeordnet wird, nämlich außerhalb der jeweiligen Gebäudegrundfläche platziert wird, und wobei für jedes Anschlussgehäuse zwischen einer jeweiligen Datenkabel-Verzweigungsstelle an dem Leerrohrstrang und dem jeweiligen Anschlussgehäuse ein jeweiliges Leerrohr für ein jeweiliges Datenkabel verlegt wird.

Offenbart sein soll auch ein Verfahren bzw. eine Verwendung zum Bereitstellen einer Datenkabelanbindung für ein Gebäude (vgl. die vorst. Definitionen), und zwar einer Anbindung an eine Datenkabel-Verzweigungsstelle (vgl. die vorst. Definitionen), wobei ein Anschlussgehäuse vorgesehen wird, das einen Gehäuseinnenraum aufweist, der von außen über eine Öffnung in dem Anschlussgehäuse zugänglich ist, wobei das Anschlussgehäuse zwischen der Datenkabel-Verzweigungsstelle und dem Gebäude positioniert wird, und zwar außerhalb einer Gebäudegrundfläche (vgl. die vorst. Definitionen), dabei aber nahe an der Gebäudegrundfläche, bspw. in einem Abstand von höchstens 1 m, bevorzugt direkt daran grenzend, wobei das Anschlussgehäuse auf einer vertikalen Höhe platziert wird, die innerhalb der fertigen Bodenaufbauhöhe liegt, wobei aber die Öffnung von oben zugänglich bleibt. Bevorzugt wird das Anschlussgehäuse so platziert, dass es an eine Außenwandfläche einer Kelleraußenwand des Gebäudes grenzt.

Das Anschlussgehäuse wird in diesem Fall nicht zwingend im Bereich der Straße, also im Schichtaufbau der Straße angeordnet. Eine Positionierung im Schichtaufbau der Straße ist zwar möglich (z. B. in der Stadt, Gebäudeaußenwand/Fassade direkt am Gehweg), aber nicht zwingend. Das Anschlussgehäuse kann bspw. auch auf einem Grundstück im Boden, also im Erdreich verlegt werden. Dabei könnte sich zwar prinzipiell die vorstehend geschilderte Setzungsproblematik ergeben, die Positionierung an der Gebäudegrundfläche schafft jedoch eine Stabilisierung, die Kelleraußenwand kann also abstützend wirken (dort stützt sich einerseits das Anschlussgehäuse selbst ab, andererseits ist auch das Erdreich etwas stabilisiert (zur Seite hin).

Die Positionierung an der Gebäudegrundfläche kann bspw. auch insoweit von Vorteil sein, als die Verbindung zwischen Anschlussgehäuse und Gebäude dann auch ganz ohne Aufgraben hergestellt werden kann. Durch die Gebäudeaußenwand kann gebohrt werden, durch diese Bohrung lässt sich das Datenkabel bzw. weitere Datenkabel (siehe vorne) dann ins Gebäude verlegen. Die Bohrung kann bspw. oberirdisch in die Gebäudeaußenwand eingebracht werden, etwa im Falle eines kellerlosen Gebäudes, oder im Falle eines unterkellerten Gebäudes auch unterirdisch, also in die Kelleraußenwand. Zu einer oberirdischen Bohrung kann das (weitere) Datenkabel bspw. in einem Kabelschacht entlang der Außenwandfläche geführt werden, die unterirdische Bohrung kann sich bevorzugt direkt in das Anschlussgehäuse erstrecken.

Das Anschlussgehäuse kann insgesamt bspw. eine vertikale Höhe von mindestens 40 cm bzw. 50 cm haben, mit möglichen (davon unabhängigen) Obergrenzen bei z. B. höchstens 100 cm, 80 cm bzw. 70 cm. Der von der Seitenwand des Anschlussgehäuses begrenzte Gehäuseinnenraum des Anschlussgehäuses kann bspw. ein Innenvolumen von mindestens 20 l, 30 l, 40 l bzw. 50 l haben, mit möglichen (davon unabhängigen) Obergrenzen bei bspw. höchstens 100 l, 90 l, 80 l, 70 l bzw. 60 l. Die den Gehäuseinnenraum seitlich begrenzende Seitenwand kann bezogen auf die vertikale Richtung zusammengesetzt sein, das Anschlussgehäuse kann also aus einem Unter- und einem aufgesetzten Oberteil aufgebaut sein. An ersterem kann dann bspw. eine oder können mehrere Anschlussstellen für das bzw. die Leerrohre vorgesehen sein, die bspw. von Steckfittingen gebildet werden können. Auf ein solches Unter- ist dann ein Oberteil gesetzt, bspw. eine Straßenkappe. Das Anschlussgehäuse kann aber andererseits über seine vertikale Erstreckung auch durchgehend aus demselben Material, also monolithisch geformt sein. Es kann insbesondere ein durchgehendes Spritzgussteil sein. An die Seitenwand des Anschlussgehäuses konkret deren Außenwandfläche, legt sich im Zuge des Einbaus des Anschlussgehäuses in den Boden z. B. das Bodenmaterial an, etwa Schüttgut wie Kies etc.

### Kurze Beschreibung der Zeichnungen

Im Folgenden wird die Erfindung anhand eines Ausführungsbeispiels näher erläutert. Dabei sind auch Figuren enthalten und beschrieben, die für sich nicht sämtliche Merkmale der Ansprüche 1 und 14 zeigen, aber den Hintergrund der Erfindung illustrieren und insbesondere auch Merkmale der abhängigen Ansprüche veranschaulichen.

Im Einzelnen zeigt
- Figur 1: eine für sich nicht erfindungsgemäße Anschlussgehäusevorrichtung mit einem Anschlussgehäuse, das aus einem Ober- und einem Unterteil zusammengesetzt ist, in schematischer Darstellung;
- Figur 2: verschiedene Möglichkeiten zur Positionierung von Anschlussgehäusen bei einer Erschließung von Gebäuden im Bestand;
- Figur 3a,b: eine erste Möglichkeit zur Weiterverlegung zwischen Anschlussgehäuse und Gebäude bzw. Verteiler/Nutzer;
- Figur 4: analog Figur 2 eine Möglichkeit zur Positionierung von Anschlussgegehäusen im Falle eines Neubaugebiets;
- Figur 5: eine zweite Möglichkeit zur Weiterverlegung zwischen Anschlussgehäuse und Gebäude bzw. Verteiler/Nutzer;
- Figur 6: eine WLAN-Einheit für öffentliches WLAN als Nutzer/Verteiler.
- Figur 7: das Unterteil der Vorrichtung gemäß Figur 1 in einer Schrägansicht von oben;
- Figur 8: das Unterteil gemäß Figur 7 in einer geschnittenen Seitenansicht;
- Figur 9: eine Anschlussstelle des Unterteils gehäuseinnenseitig in einer Detailansicht;
- Figur 10: ein die Anschlussstelle bildendes Fitting im Schnitt;
- Figur 11: ein das Unterteil bildendes Thermoformteil in einer Einzeldarstellung;
- Figur 12: einen horizontalen Schnitt durch das Formteil gemäß Figur 11;
- Figur 13: eine Standfläche des Unterteils;
- Figur 14: eine erfindungsgemäße Anschlussgehäusevorrichtung mit einem Formteil als Unterteil und einer höhenverstellbaren Straßenkappe als Oberteil;
- Figur 15: die Anschlussgehäusevorrichtung gemäß Figur 14 in einer geschnittenen Seitenansicht;
- Figur 16: das Unterteil der Anschlussgehäusevorrichtung gemäß den Figuren 14 und 15 in einer Schrägansicht von oben;
- Figur 17: das Unterteil gemäß Figur 16 in einer Schrägansicht von unten;
- Figur 18: eine Rastverbindung zwischen Straßenkappe und Formteil der Anschlussgehäusevorrichtung gemäß den Figuren 14 und 15 in einer geschnittenen Detailansicht;
- Figur 19: ein weiteres als Unterteil einer Anschlussgehäusevorrichtung vorgesehenes Formteil;
- Figur 20: das Formteil gemäß Figur 19 in einer vertikalen Aufsicht;
- Figur 21: in schematischer Ansicht eine Anschlussgehäusevorrichtung, in deren Anschlussgehäuse ein Dichtbehälter mit einem Kabelgehäuse angeordnet ist.

### Bevorzugte Ausführung der Erfindung

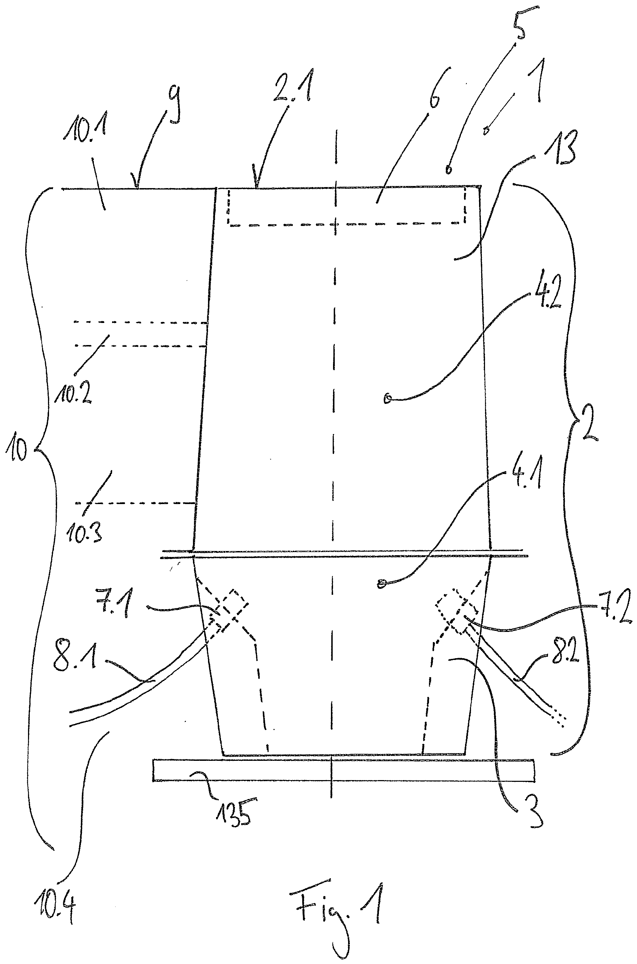

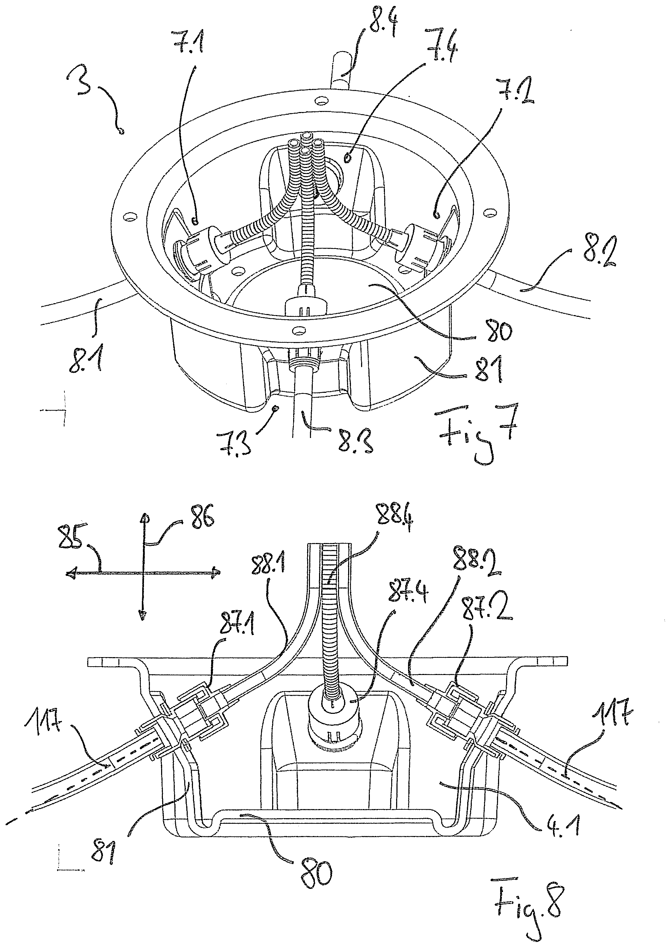

Figur 1 zeigt eine für sich nicht erfindungsgemäße Anschlussgehäusevorrichtung 1 mit einem Anschlussgehäuse 2, das aus einem Unterteil 3 und einem Oberteil 13 zusammengesetzt ist. Bei dem Oberteil 13 handelt es sich um eine Stra-ßenkappe, das Unterteil 3 wird im Detail anhand der Figuren 7-13 diskutiert. Das Anschlussgehäuse 2 begrenzt einen Gehäuseinnenraum 4, welcher sich der Gliederung in Unter- und Oberteil 3, 13 entsprechend in einen unteren Abschnitt 4.1 und einen oberen Abschnitt 4.2 gliedert. Oberseitig weist das Anschlussgehäuse 2 eine Öffnung 5 auf, über welche der Gehäuseinnenraum 4 zugänglich ist, und die vorliegend mit einem Deckel 6 verschlossen ist.

Das Anschlussgehäuse 2 ist mit Anschlussstellen 7.1, 7.2 ausgestattet. An die Anschlussstelle 7.1 ist ein Leerrohr 8.1 angesetzt, das sich von einem Leerrohrstrang zu dem Anschlussgehäuse 2 erstreckt. An die Anschlussstelle 7.2 wird, je nach Anwendung und Vorgehen im Einzelnen, ein Anschluss-Leerrohr 8.1 angesetzt, welches dann das Anschlussgehäuse 2 mit dem Verteiler/Nutzer, bspw. einem Gebäude verbindet.

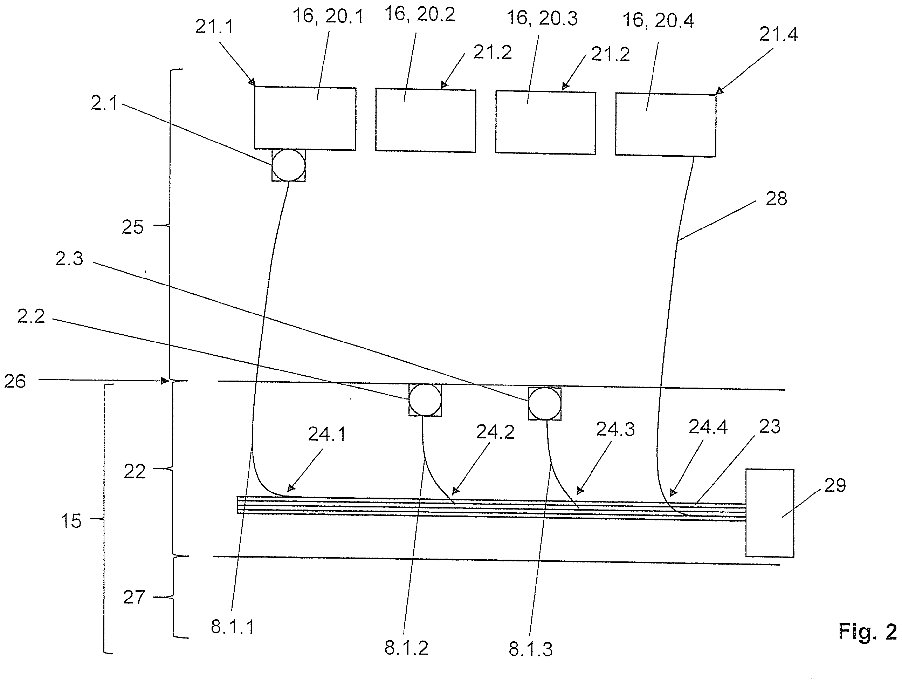

Das Anschlussgehäuse 2 wird außerhalb des Gebäudes im Schichtaufbau 10 der Straße 15 platziert (siehe auch Figur 2), sodass eine Oberkante 2.1 des Anschlussgehäuses 2 bündig mit einer Oberkante 9 des Schichtaufbaus 10 liegt, der in der linken Bildhälfte skizziert ist. Eine obere Schicht 10.1 kann bspw. die Pflasterschicht (Gehweg) oder Asphaltdeckschicht (Straße) sein, die Schicht 10.2 darunter kann entsprechend ein Bett oder eine Binderschicht sein. Die darunterliegenden Schichten 10.3,10.4 stellen Tragschichten dar. Wird das Anschlussgehäuse 2 positioniert, ist die Lage der Oberkante 9 bereits bekannt (festgelegt), auch wenn der Schichtaufbau 10 mitunter erst deutlich später erstellt wird.

Figur 2 illustriert verschiedene Möglichkeiten bei einer Anwendung im Bestand. In der hier dargestellten Situation wird ein Straßenzug durch Glasfaserverlegung erschlossen. Schematisch sind als Datennutzerstellen 16 vier Gebäude 20.1-20.4 dargestellt, die jeweils auf einer Gebäudegrundfläche 21.1-21.4 stehen. Für die Erschließung wird der Gehweg 22 aufgebrochen und wird ein Graben ausgehoben, dieser ist in der schematischen Aufsicht nicht im Einzelnen dargestellt. In dem Graben wird ein Leerrohrstrang 23 verlegt, für jedes Gebäude 20.1-20.4 gibt es eine jeweilige Datenkabel-Verzweigungsstelle 24.1-24.4. Zur Illustration und Orientierung: in der Darstellung oberhalb des Gehwegs 22 erstrecken sich die jeweiligen Grundstücke 25, dazwischen liegt jeweils die Grundstücksgrenze 26. In der Darstellung unterhalb des Gehwegs 22 verläuft die Fahrbahn 27, die wie der Gehweg 22 Teil der Straße 15 ist.

Im Zuge der Erschließung dieses Straßenzugs hat sich hier exemplarisch nur ein Eigentümer für einen sofortigen Anschluss entschlossen, dies ist das Gebäude 20.4. In diesem Fall kann von der Datenkabel-Verzweigungsstelle 24.4 zu dem Gebäude 20.4 direkt ein Leerrohr 28 verlegt werden. Durch dieses wird dann das Datenkabel verlegt.

Für die Gebäude 20.1-20.3, für die (vorerst) kein Anschluss gewünscht ist, wird jeweils ein Anschlussgehäuse 2.1-2.3 platziert. Ferner wird, weil ja der Graben momentan ausgehoben ist, ein jeweiliges Leerrohr 8.1.1-8.1.3 zwischen der jeweiligen Datenkabel-Verzweigungsstelle 24.1-24.3 und dem jeweiligen Anschlussgehäuse 2.1-2.3 verlegt, vgl. auch die Zusammenschau mit Figur 1 zur Illustration. Der Graben kann dann aufgeschüttet, und es kann der Schichtaufbau 10 wiederhergestellt werden.

Soll dann später zu einem der Gebäude 20.1-20.3 doch ein Datenkabel verlegt werden, muss jedenfalls der Gehweg 22 nicht mehr aufgegraben werden. Durch das entsprechende Leerrohr 8.1.1-8.1.3 kann über die jeweilige Datenkabel-Verzweigungsstelle 24.1-24.3 von einem Knotenpunkt 29 aus ein Datenkabel eingeblasen werden, es kann der Deckel 6 des Anschlussgehäuses 2 geöffnet und das Datenkabel dort entgegengenommen werden. Bei dem Gebäude 20.1 sitzt das Anschlussgehäuse 2.1 direkt an der Gebäudegrundfläche 21.1, und zwar nicht hauptanspruchsgemäß nicht im Bereich der Straße, sondern auf dem Grundstück 25. Bei der Platzierung direkt am Gebäude muss gar nicht mehr aufgegraben, sondern nur durch die Gebäudeaußenwand gebohrt werden. Bei den Gebäuden 20.2,20.3 muss zur Erdverlegung zwar ein Stück auf dem Grundstück 25 ausgehoben werden, der Aufwand hierfür ist jedoch deutlich geringer als für das Aufgraben des Gehwegs 22.

Aufgrund ihrer Positionierung im Schichtaufbau 10 der Straße 15 sind die Anschlussgehäuse 2.2,2.3 stabil gehalten, sie können nicht absacken bzw. verkippen. Damit kann einem Herausrutschen der Leerrohre 8.1,8.2 und damit einem Abknicken des Datenkabels vorgebeugt werden. Ein einfach in die Erde gesetztes, also nicht in Tragschichten 10.3,10.4 eingefasstes Anschlussgehäuse 2 wäre hingegen instabil, speziell Glasfaserkabel wären bruchgefährdet. Das Anschlussgehäuse 2.1 ist zwar nicht im Schichtaufbau 10 der Straße 15 vorgesehen, jedoch aufgrund der Positionierung direkt am Gebäude 20.1 stabilisiert.

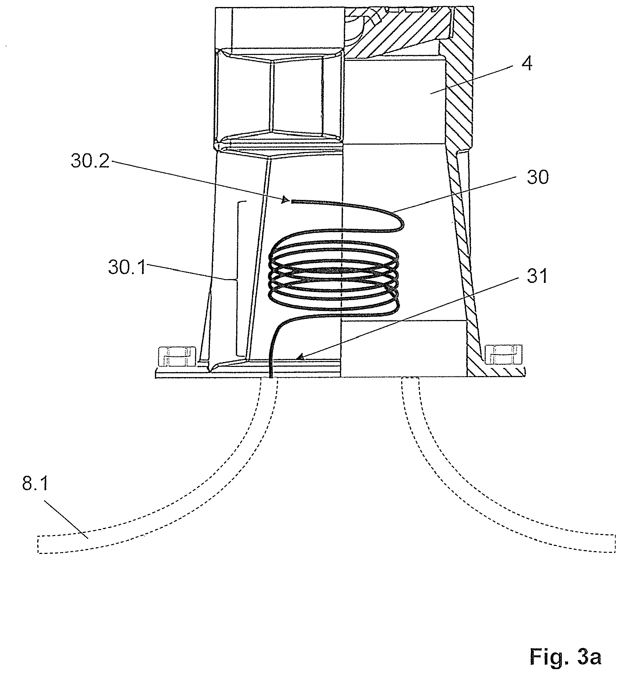

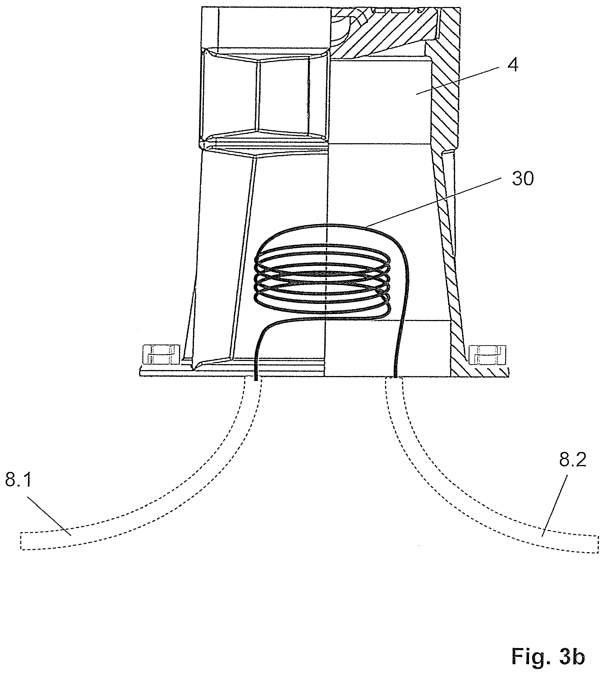

Die Figuren 3a,b illustrieren, wie ein Datenkabel 30 durch das Leerrohr 8.1 in das Gehäuseinnere 4 verlegt wird, wobei der Übersichtlichkeit halber nur das Oberteil 13 (die Straßenkappe) ohne das Unterteil 3 dargestellt ist. Das Verlegen des Datenkabels 30 erfolgt in diesem Fall mit einer Überlänge, ein Endabschnitt 30.1 des Datenkabels 30 hat von einer Eintrittsstelle 31 in das Gehäuseinnere 4 weg genommen eine Länge von rund 10 m.

Figur 3b illustriert, wie dieser Endabschnitt 30.1 dann durch das vorab oder nachträglich angesetzte Anschluss-Leerrohr 8.2 weiter zur Datennutzer- bzw. - verteilerstelle 16 verlegt, also im Falle von Fig. 2 zum Gebäude. Konkret wird das Ende 30.2 des Datenkabels 30 in das Leerrohr 8.2 eingeschoben, im fertig installierten Zustand liegt es dann innerhalb des Gebäudes.

Der Zustand gemäß Figur 3a (Vorverlegung bis in das Anschlussgehäuse 2) kann in der Situation gemäß Figur 2 für die Anschlussgehäuse 2.1-2.3 im selben Arbeitsvorgang hergestellt werden, in dem auch der Anschluss durch das Leerrohr 28 gelegt wird. Es wäre dann also in jedes der Anschlussgehäuse 2.1-2.3 ein Datenkabel 30 vorverlegt, wobei der entsprechende Endabschnitt 30.1 bevorzugt in Schleifenform (Bruchgefahr) abgelegt wird. Das Unterteil 3 kann hierfür bspw. zusätzlichen Raum schaffen bzw. auch eine Unterteilung in mehrere Bereiche ermöglichen, vgl. die Beschreibungseinleitung. Zusammengefasst gibt es also einerseits die Möglichkeit, dass die Anschlussgehäuse 2.1-2.3 bei der Vorverlegung bereits tatsächlich mit Datenkabeln 30 bestückt werden. Andererseits ist jedoch auch allein die Positionierung und Anbindung über die Leerrohre 8.1.1-8.1.3 dahingehend ausreichend, dass der Gehweg nicht mehr aufgegraben werden muss.

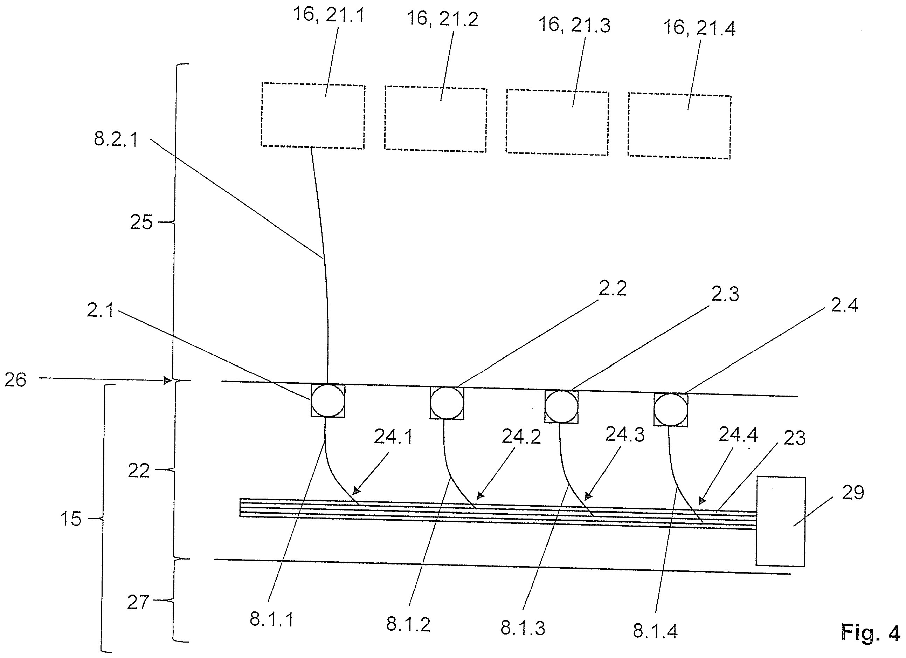

Figur 4 illustriert eine Anwendung in einem Neubaugebiet. Zur Orientierung sind wiederum der Gehweg 22 und die Fahrbahn 27 der Straße 15 eingezeichnet, wobei diese bei der Verlegung des Leerrohrstranges 23 noch gar nicht hergestellt sind. In diesem Fall sind auch noch keine Gebäude erstellt (jedenfalls noch nicht vollständig), weswegen nur die Gebäudegrundflächen 21.1-21.4 eingezeichnet sind.

Bei der Verlegung des Leerrohrstranges 23 wird an jeder Datenkabel-Verzweigungsstelle 24.1-24.4 ein jeweiliges Leerrohr 8.1.1-8.1.4 zu einem jeweiligen Anschlussgehäuse 2.1-2.4 verlegt. Die Anschlussgehäuse 2.1-2.4 werden in diesem Fall an den Grundstücksgrenzen 26, aber noch auf dem Gehweg 22 platziert. Dadurch werden die späteren Bauarbeiten auf den Grundstücken 25 nicht behindert.

Wird dann das erste Gebäude fertiggestellt, bspw. auf der Gebäudegrundfläche 21.1, wird zwischen dem Anschlussgehäuse 2.1 und diesem Gebäude ein Anschluss-Leerrohr 8.2.1 verlegt. Von dem Knotenpunkt 29 her wird dann das Datenkabel über die Datenkabel-Verzweigungsstelle 24.1 und das Anschlussgehäuse 2.1 bis in das Gebäude verlegt. In diesem Zuge werden dann auch zu den anderen Anschlussgehäusen 2.2-2.4 bereits die Datenkabel verlegt, sie können dort analog Figur 3a abgelegt werden. Es muss dann vorteilhafterweise nur einmal an dem Knotenpunkt 29 hantiert werden.

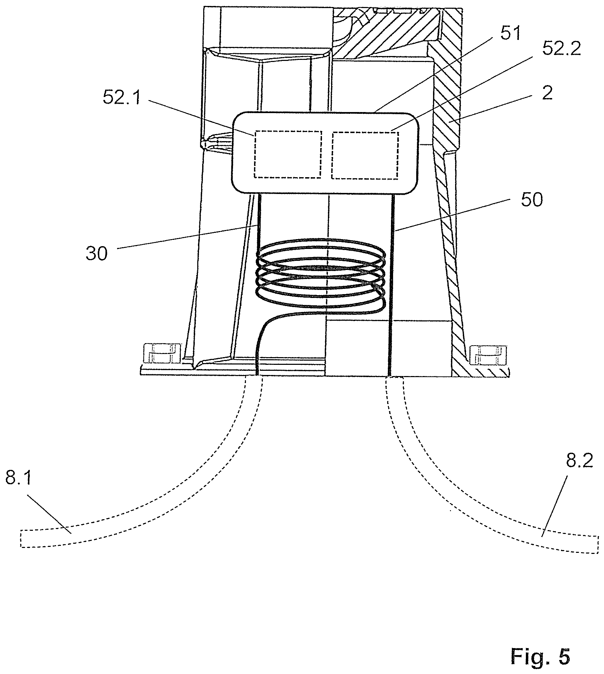

Figur 5 illustriert eine Alternative zu dem Vorgehen gemäß den Figuren 3a,b, nämlich die Herstellung der Nutzer/Verteiler-, insbesondere Gebäudeanbindung über ein weiteres Datenkabel 50. Dieses wird in dem Anschlussgehäuse 2 mit dem Datenkabel 30 verbunden, vorliegend durch Zusammenstecken in einem Steckergehäuse 51. Dieses weist einen abgedichteten Innenraum auf, in diesem werden die Datenkabel 30,50 zusammengesteckt. Jedes der Datenkabel 30,50 tritt gedichtet in das Steckergehäuse 51 ein. Das Steckergehäuse kann prinzipiell eine Zugangsöffnung haben, bevorzugt kann eine Variante mit zwei separaten Zugangsöffnungen 52.1,52.2 sein. Jede Öffnung 52.1,52.2 ist mit einem eigenen Verschluss versehen, die Öffnung 52.1 wird zum Einbringen des Datenkabels 30 geöffnet, die Öffnung 52.2 zum Einbringen des Datenkabels 50.

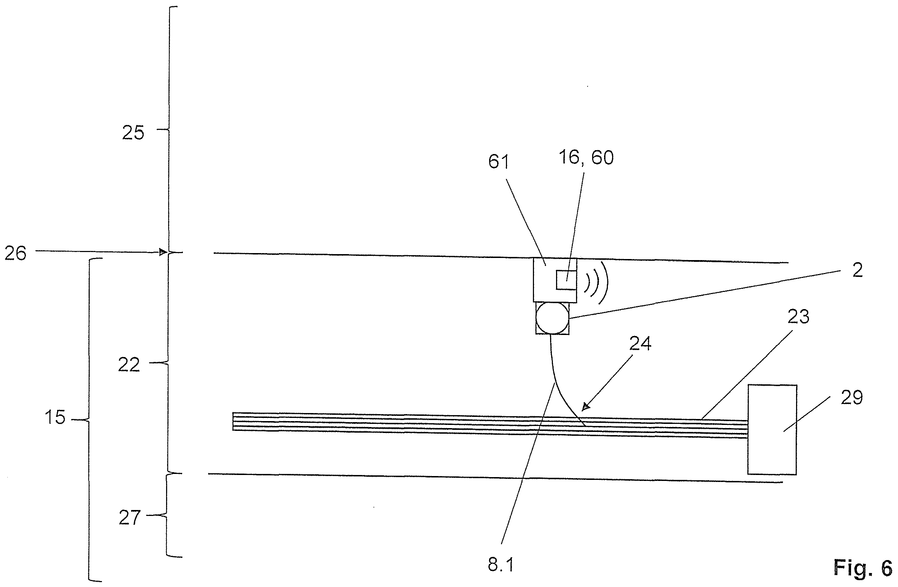

Figur 6 zeigt eine weitere Anwendungsmöglichkeit, wobei das Anschlussgehäuse 2 wiederum zwischen einer Datenkabel-Verzweigungsstelle 24 und einer Datennutzer- oder -verteilerstelle 16 platziert wird. Konkret handelt es sich bei letzterer um eine Funkeinheit 60, nämlich ein WLAN-Modul. Dieses ist bzw. wird zur Bereitstellung eines öffentlichen WLAN-Netzes in einem hier schematisch gezeigten Laternenpfosten 61 angeordnet. Bei der Erschließung des Straßenzugs, also wenn der Gehweg 22 aufgegraben ist und der Leerrohrstrang 23 verlegt wird, wird das Anschlussgehäuse 2 neben dem Laternenpfosten 61 platziert und über das Leerrohr 8.1 mit der Datenkabel-Verzweigungsstelle 24 verbunden.

Bei den übrigen, entlang der Straße 15 angeordneten (nicht dargestellten) Laternenpfosten wird in analoger Weise verfahren, wird also jeweils ein Anschlussgehäuse 2 platziert (nicht zwingend an jedem Laternenpfosten, es kann bspw. auch jeder zweite für eine hinreichende Netzabdeckung ausreichend sein). Werden dann später die Datenkabel von dem Knotenpunkt 29 her eingeblasen, können die Datenkabel analog der vorstehenden Schilderung (siehe "Neubau") in einem Arbeitsgang in jedes Anschlussgehäuse 2 verlegt werden, die Anbindung des jeweiligen Funkmoduls 60 kann dann nach und nach erfolgen. Die Anschlussgehäuse 2 lassen sich auch bei Laternenpfosten 61 platzieren, wenn diese vorerst noch gar nicht mit einem Funkmodul 60 ausgestattet sind bzw. werden sollen. Das Anschlussgehäuse 2 kann eine spätere Nachrüstung deutlich vereinfachen (kein Aufgraben des Gehwegs 22).

Bei der Variante gemäß Figur 6 kann in dem Anschlussgehäuse 2 analog Figur 5 verfahren werden (Steckverbindung), bevorzugt ist die Variante gemäß den Figuren 3a,b (Hindurchschleifen einer Überlänge). Das Anschlussgehäuse 2 kann hierfür bspw. geöffnet werden, und es kann dann eine Verbindung durch eine Gehäusewand des Anschlussgehäuses 2 und eine Sockelwand des Laternenpfostens 61 gebohrt werden. Selbstverständlich kann die Variante gemäß Figur 6 bspw. auch mit jener gemäß Figur 2 kombiniert werden, können bei der Erschließung der Straße 15 also sowohl an den vorerst nicht angeschlossenen Gebäuden 20.1-20.3 als auch an Laternenpfosten 61 (oder auch Ampeln etc.) Anschlussgehäuse 2 platziert werden.

Figur 7 zeigt das Unterteil 3 ohne aufgesetzte Straßenkappe, es sind insgesamt vier Anschlussstellen 7.1-7.4 zu erkennen. An jede davon kann ein Leerrohr 8.1-8.4 gesetzt werden. Mit einem entsprechend ausgestatteten Anschlussgehäuse lassen sich bspw. auch mehrere Nutzer/Verteiler anbinden, es kann bspw. für zwei Gebäude jeweils ein Leerrohr 8.1, 8.3 zwischen dem Leerrohrstrang und dem Anschlussgehäuse verlegt werden, sowie jeweils ein weiteres Leerrohr 8.2, 8.4 (Anschluss-Leerrohr) zwischen dem Anschlussgehäuse 2 und dem jeweiligen Gebäude.

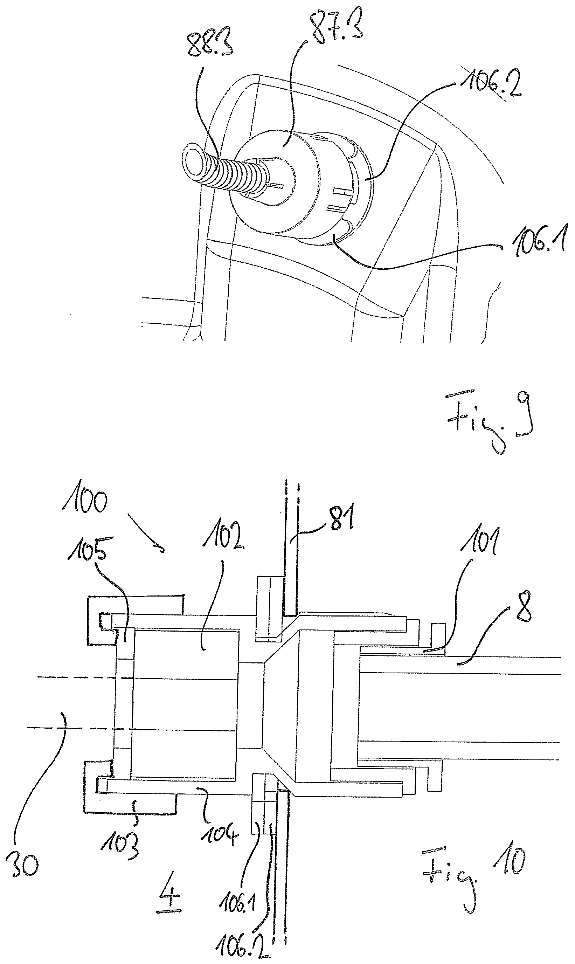

Das Unterteil 3 weist eine Bodenwand 80 und eine Seitenwand 81 auf, vergleiche auch den Schnitt gemäß Figur 8. Die Seitenwand 81 begrenzt den unteren Abschnitt 4.1 des Gehäuseinnenraums 4 horizontal, also in den Horizontalrichtungen 85. Die Bodenwand begrenzt den Gehäuseinnenraum 4 vertikal, also bezüglich der Vertikalrichtungen 86 nach unten. Wie anhand von Figur 10 im Detail diskutiert, bilden Fittinge die jeweilige Anschlussstelle.

Innenseitig im Gehäuseinnenraum ist auf das jeweilige Fitting ein jeweiliges Adapterstück 87.1-87.4 gesetzt, vergleiche auch die Detailansicht gemäß Figur 9. Das jeweilige Adapterstück 87.1-87.4 hält eine jeweilige Führungsvorrichtung 88.1-88.4, nämlich ein an das jeweilige Fittinggehäuse innenseitig anschließendes Leerrohr. Wie aus Figur 7 ersichtlich, erstrecken sich diese Leerrohre gekrümmt nach oben, die Leerrohre enden innerhalb des Anschlussgehäuses 2. Wird über die entsprechende Anschlussstelle 7.1-7.4 von außen ein Datenkabel 30, insbesondere ein Glasfaserkabel eingeblasen, wird dieses in der entsprechenden Führungsvorrichtung 88.1-88.4 nach oben in Richtung der Öffnung 5 des Anschlussgehäuses 2 geführt, es kann einem Verheddern und damit bspw. einer Beschädigung der Glasfaser vorgebeugt werden.

Figur 10 zeigt ein Fitting 100, das in die Seitenwand 81 gesetzt wird, in einem Schnitt. Der Gehäuseinnenraum 4 ist in der Darstellung auf der linken Seite angeordnet, von rechts wird das erdverlegte Leerrohr 8 eingeschoben. Bei dem Fitting 100 handelt es sich um ein Steckfitting, das Leerrohr 8 ist nach dem vollständigen Einschieben über eine Verkrallung auszugssicher gehalten (das Leerrohr 8 ist nicht im vollständig, sondern teilweise eingeschobenen Zustand gezeigt). Die Verkrallung lässt sich durch Eindrücken eines Demontagerings 101 wieder lösen, solche Fittinge sind im Rohrleitungsbau kommerziell verfügbar (der Demontagering 101 drückt die Verkrallung von dem Leerrohr 8 weg).

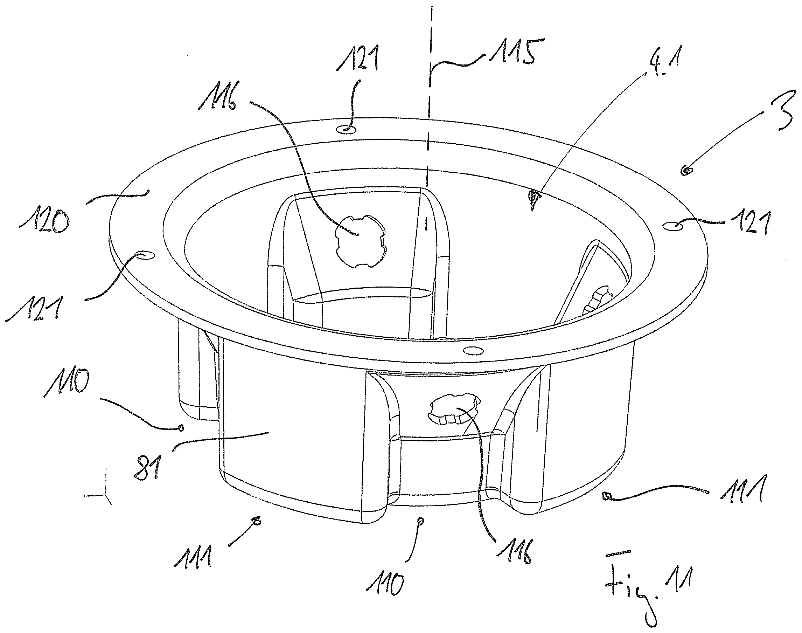

Das Fitting 100 ist in die Seitenwand 81 gesetzt und aufgrund einer Konturierung der Öffnung (vergleiche Figur 11) verdrehsicher gehalten. Dies ist speziell mit Blick auf den Montageschritt nach dem Einblasen des Datenkabels 30 von Vorteil, wenn dieses nämlich gegen das Leerrohr 8 gedichtet wird. Dazu weist das Fitting 100 ein Dichtelement 102 auf, das durch Anziehen einer Überwurfmutter 103 axial gestaucht und damit dicht an das Datenkabel 30 angedrückt wird. Der Übersichtlichkeit halber ist das Datenkabel 30 nur linkerhand des Fittings 100 strichliert dargestellt.

Im Zuge der axialen Kompression legt sich das Dichtelement 102 nicht nur an das Datenkabel 30, sondern auch an eine Innenwandfläche des Gehäuses 104 an, sodass das Leerrohr 8 zum Gehäuseinnenraum 4 hin gedichtet ist. Die Überwurfmutter 103 ist dazu auf einem (nicht dargestellten) Gewinde an der Außenwandfläche des Gehäuses 104 geführt. Sie überträgt die Kraft über einen nach innen eingestellten Kragen auf das Dichtelement 102, wobei dazwischen eine Unterlegscheibe 105 zur Verteilung der Andrückkraft vorgesehen ist.

Des Gehäuse 104 hat, in einem zur Mittenachse des Leerrohres 8 senkrechten Schnitt betrachtet eine Kontur. Diese Kontur ist in dem konturierten Loch 116 in der Seitenwand 81 verdrehsicher gehalten. Damit dreht das Fitting 100 beim Anziehen der Überwurfmutter 103 nicht mit, was die Montage vereinfacht (ein Monteur muss hierbei von oben in das Anschlussgehäuse 2 hineingreifen). Das Fitting 100 ist in Figur 10 von der rechten Seite in das Loch 116 in der Seitenwand 81 eingesetzt (ohne die Überwurfmutter 103, diese wird dann aufgeschraubt). Als Auszugssicherung sind zwei Sicherungsring 106.1, 106.2 vorgesehen, die jeweils aufgeclipst werden und das Fitting 100 so gegenüber der Seitenwand 81 verspreizen. Die Sicherungsringe 106.1, 106.2 sind jeweils ein Stück weit geöffnet, was aus der Schrägansicht gemäß Figur 9 für den Sicherungsring 106.1 ersichtlich ist.

Wie die Zusammenschau der Figuren 9 und 10 illustriert, ist im vollständig zusammengesetzten Zustand auf die jeweilige Überwurfmutter 103 ein jeweiliger Adapter 87.1-87.4 gesetzt (dieser ist in Figur 10 der Übersichtlichkeit halber nicht dargestellt). Der Adapter 87.1-87.4 sitzt formschlüssig auf der jeweiligen Überwurfmutter 103, hat also eine der Überwurfmutter 103 entsprechende Innenkontur. Dadurch kann, nach dem Einblasen des Datenkabels 30, durch Drehen des jeweiligen Adapters 87.1-87.4 die jeweilige Überwurfmutter 103 gedreht und kann das Dichtelement 102 in der vorstehend geschilderten Weise angedrückt werden.

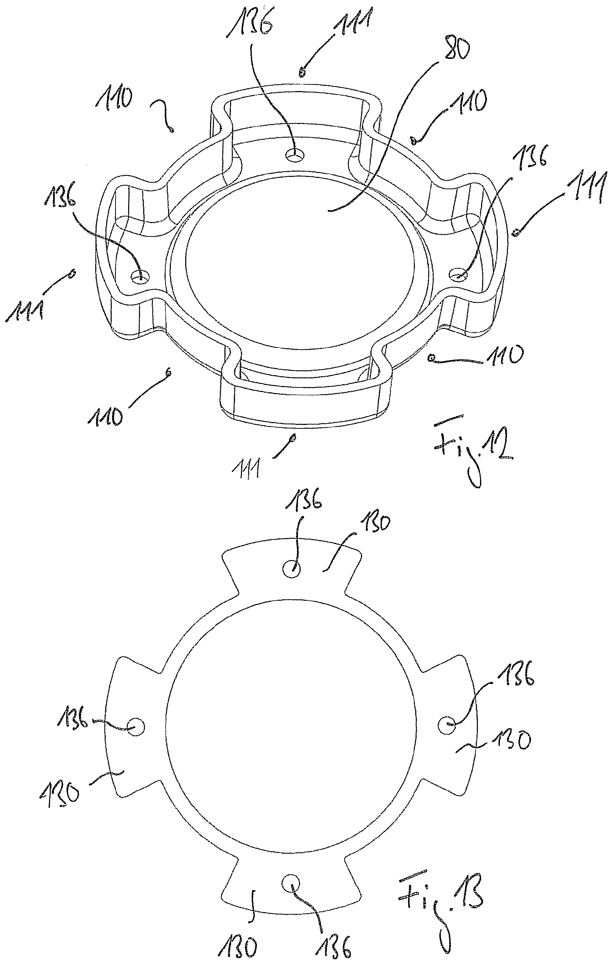

Figur 11 zeigt das Unterteil 3 in einer Einzeldarstellung, also ohne die Fittinge. Dieses Unterteil 3 ist aus Kunststoff hergestellt, und zwar durch Thermoformen. Die Seitenwand 81 ist in einem horizontalen Schnitt betrachtet, vergleiche auch Figur 12, konturiert geformt. Sie ist in Einbuchtungsbereichen 110 nach innen versetzt, in Ausbuchtungsbereichen 111 nach außen. Bezogen auf einen Umlauf um eine vertikale Achse 115 folgen die Einbuchtungs- und Ausbuchtungsbereiche 110,111 abwechselnd aufeinander, was eine stabile Form schafft.

Ferner sind in den Einbuchtungsbereichen 110 die Anschlussstellen 7.1-7.4 platziert, sind nämlich Löcher 116 in der Seitenwand 81 zum Einsetzen der Fittinge vorgesehen. Diese sind jeweils am oberen Ende des jeweiligen Einbuchtungsbereichs 110 angeordnet, wo sich die Seitenwand 81 schräg zur vertikalen Achse 115 erstreckt. Dementsprechend liegt auch eine Mittenachse 117 des an das jeweilige Fitting gesetzten Leerrohres 8.1-8.4 gewinkelt zur nach oben weisenden vertikalen Richtung 86 (vergleiche Figur 8, dort sind zwei Mittenachsen 117 eingezeichnet).

Am oberen Ende des Unterteils 3 läuft die Seitenwand 81 in einem Flansch 120 nach außen. Auf diesen wird die Straßenkappe gesetzt und über Löcher 121 verschraubt.

Figur 12 zeigt einen Horizontalschnitt durch das Unterteil 3, es ist lediglich ein unterer Abschnitt davon dargestellt. Dies lässt nochmals die umlaufend aufeinanderfolgenden Ein- und Ausbuchtungsbereiche 110, 111 erkennen. Ferner ist aus dieser Darstellung ersichtlich, dass die Bodenwand 80 in einem mittleren Bereich etwas angehoben ist, vergleiche auch den Schnitt gemäß Figur 8. In den Ausbuchtungsbereichen 111 bildet die Bodenwand 80 jeweils eine Standfläche 130, siehe Figur 13 (diese illustriert, mit welcher Fläche das Unterteil 3 auf einer Tragplatte 135 aufsitzt, vergleiche Figur 1). In den Ausbuchtungsbereichen 111 ist die Bodenwand 80 jeweils mit einem Loch 136 versehen, das der Montage auf der Tragplatte 135 und/oder dem Abführen von in das Anschlussgehäuse 2 eingelaufenem Wasser dienen kann.

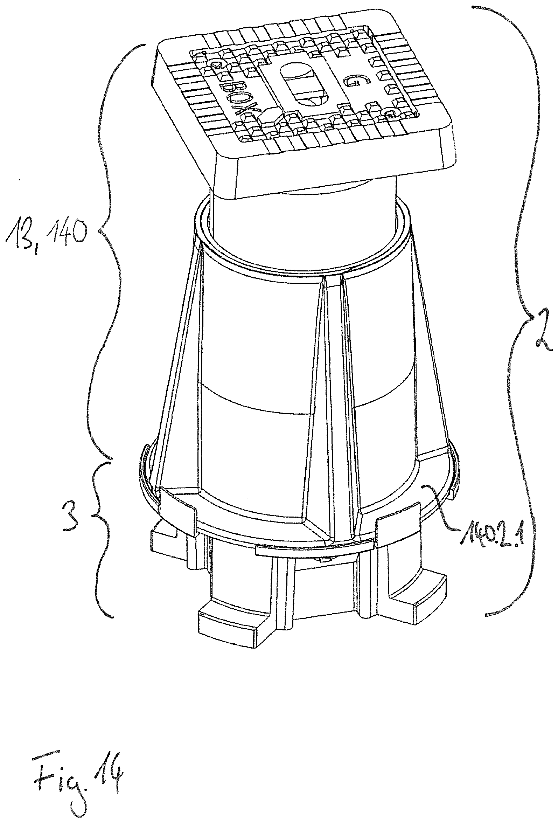

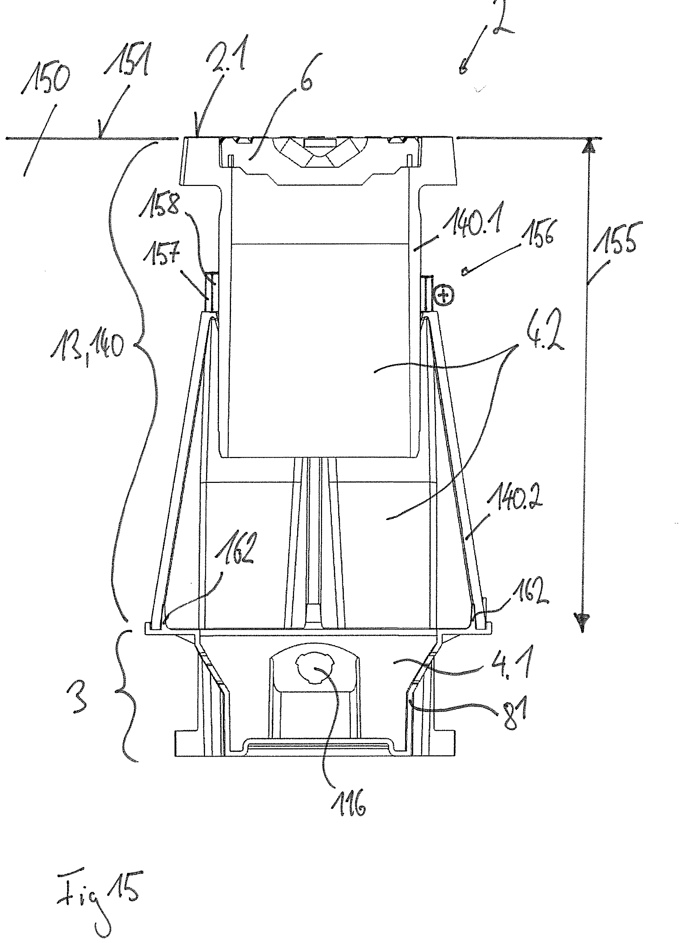

Figur 14 zeigt eine weitere Anschlussgehäusevorrichtung 1, deren Anschlussgehäuse 2 aus einem Formteil 3 als Unterteil und einer Straßenkappe 140 als Oberteil aufgebaut ist. Im Folgenden wird ergänzend auch auf Figur 15 verwiesen, welche das Anschlussgehäuse 2 in einer geschnittenen Seitenansicht zeigt. Das Anschlussgehäuse 2 wird solchermaßen in den Boden 150 eingebaut, dass seine Oberkante 2.1 bündig mit der Oberkante 151 des Bodens 150 liegt. Bei Letzterem kann es sich analog der vorstehenden Schilderung um einen Schichtaufbau einer Straße handeln, das Anschlussgehäuse kann über bspw. auch auf einer Gartenfläche eingebaut werden, also z. B. in die Mutterboden-/Humusschicht. Ebenso kann Schüttgut wie z. B. Kies den Boden 150 bilden.

Wie aus Figur 15 ersichtlich, ist der Gehäuseinnenraum 4 im eingebauten Zustand noch immer von oben zugänglich, nämlich durch Herausnehmen des Deckels 6.

Im eingebauten Zustand sind ferner analog der vorstehenden Schilderung Leerrohre 8 zum Führen von Datenkabeln 30 an das Anschlussgehäuse 2 angeschlossen, nämlich an das Formteil 3. In dessen Seitenwand 81 sind dazu analog Figur 11 Löcher 116 vorgesehen, vgl. auch die nachstehenden Abbildungen im Detail.

Die Straßenkappe 140 gemäß den Figuren 14 und 15 ist höhenverstellbar, ihre vertikale Erstreckung 155 ist also einstellbar. Dazu ist die Straßenkappe 140 aus einem oberen Rohrabschnitt 140.1 und einem unteren Rohrabschnitt 140.2 aufgebaut, in welchem das obere Rohrabschnitt 140.1 teleskopierbar geführt ist. Damit es nach dem Einstellen der gewünschten vertikalen Erstreckung 155 und vor dem Herstellen des Bodenaufbaus nicht zu einem unbeabsichtigten Absacken, also Hineinrutschen des oberen Rohrabschnitts 140.1 kommt, ist ein Arretiermittel 156 vorgesehen, nämlich eine Spannschelle 157, die zur Rutschhemmung auf einer Gummimatte 158 angeordnet ist.

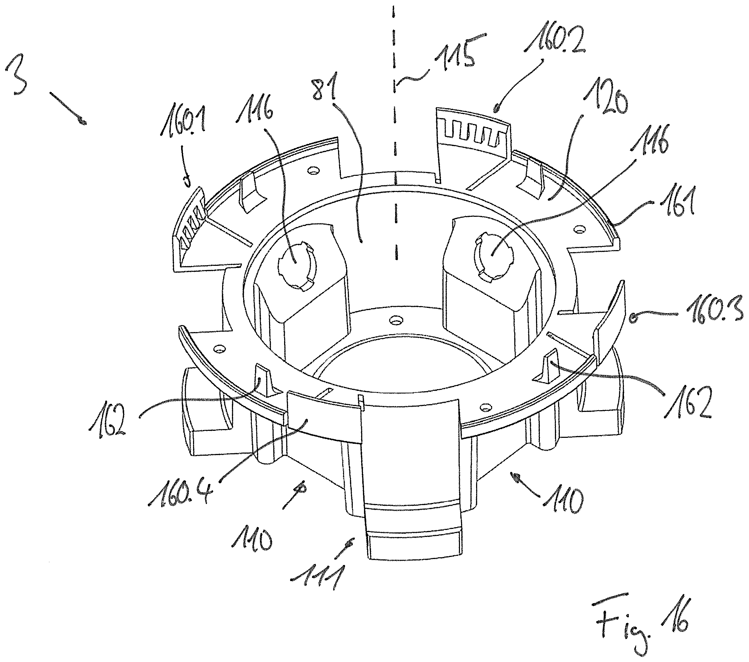

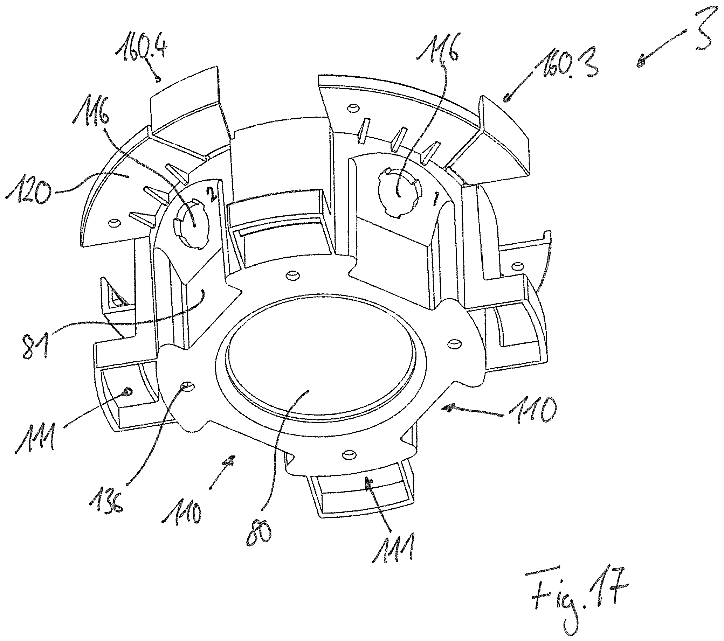

Die Figuren 16 und 17 zeigen das Formteil 3 in einer Einzeldarstellung, und zwar Figur 16 von schräg oben und Figur 17 von schräg unten. Zu erkennen sind wiederum Einbuchtungsbereiche 110 und Ausbuchtungsbereiche 111, die bezogen auf die vertikale Achse 115 umlaufend aufeinander folgen (stabile Form). Ferner sind in den Einbuchtungsbereichen 110 die Anschlussstellen 7.1-7.4 angeordnet, sind dort nämlich in der Seitenwand 81 Löcher 116 zum Einsetzen der Fittinge vorgesehen, vgl. die vorstehenden Erläuterungen. Diese sind wiederum solchermaßen schräg orientiert, dass die später angesetzten Leerrohre gewinkelt zur vertikalen Achse 115 in den Gehäuseinnenraum 4 münden.

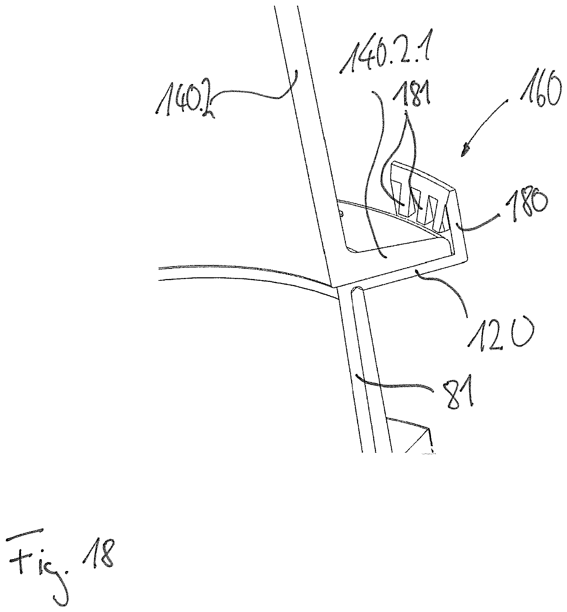

Am oberen Ende des Formteils 3 ist wiederum ein Flansch 120 vorgesehen, auf welchen die Straßenkappe 140 aufgesetzt wird. Die Befestigung erfolgt vorliegend durch Verrasten, wozu das Formteil 3 Rastmittel 160.1-160.4 aufweist, vgl. Figur 18 im Detail. Ferner ist an dem Flansch 120 ein Kragen 161 ausgebildet, der den aufgesetzten Flansch 140.2.1, der am unteren Ende der Straßenkappe 140 ausgebildet ist (vgl. Figur 14), nach außen einfasst. Ferner gibt es sich vertikal erhebende Stege 162, die sich an eine Innenwandfläche des unteren Rohrabschnitts 140.2 anlegen, vgl. auch Figur 15.

Figur 18 zeigt ein Rastmittel 160 in einer Detailansicht, und zwar in einem Schnitt. Der Flansch 140.2.1, der an dem unteren Rohrabschnitt 140.2 der Straßenkappe 140 ausgebildet ist, sitzt auf dem Flansch 120 des Formteils 3 auf. Das Rastmittel 160 ist in Form eines Stegs 180 mit Rastnasen 181 vorgesehen, die den Flansch 140.2.1 und damit die Straßenkappe 140 formschlüssig an dem Formteil 3 halten.

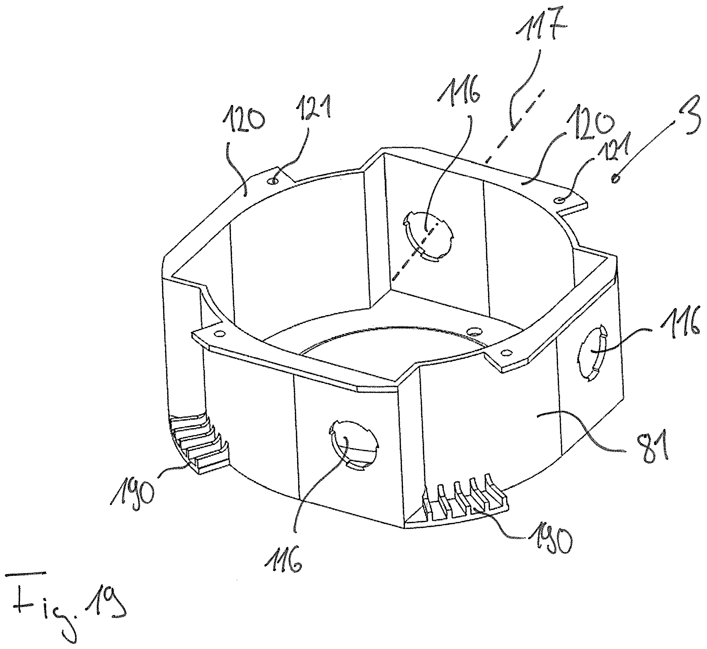

Figur 19 zeigt ein weiteres Formteil 3. Dieses ist analog dem Formteil gemäß den Figuren 14-18 als Kunststoff-Spritzgußteil vorgesehen, es wird allerdings nicht mit dem Oberteil 13 bzw. der Straßenkappe 140 verrastet, sondern analog dem Formteil gemäß den Figuren 11-13 verschraubt oder bspw. auch vernietet. Dazu weist das Formteil 3 am oberen Ende der Seitenwand 81 wiederum einen nach außen hervortretenden Flansch 120 auf, auf den das Oberteil 13 bzw. die Straßenkappe 140 aufgesetzt wird. Zum Verbinden sind wiederum Löcher 121 vorgesehen, die z. B. mit Löchern im Flansch 140.2.1 der Straßenkappe 140 fluchtend angeordnet werden und die Nieten oder Schrauben aufnehmen.

Auch das Formteil 3 gemäß Figur 19 weist eine Seitenwand 81 auf, die mit Löchern 116 zum Ausbilden von Anschlussstellen versehen ist, also zum Einsetzen von Fittingen. Im Unterschied zu den vorstehend diskutierten Varianten sind die Löcher 116 vorliegend jeweils in einem sich senkrecht, also vertikal geradlinig nach unten erstreckenden Abschnitt der Seitenwand 81 angeordnet. Dementsprechend liegen die eingesetzten Fittinge bzw. Mittenachsen der angesetzten Leerrohre dann nicht verkippt, sondern parallel zur Horizontalen.

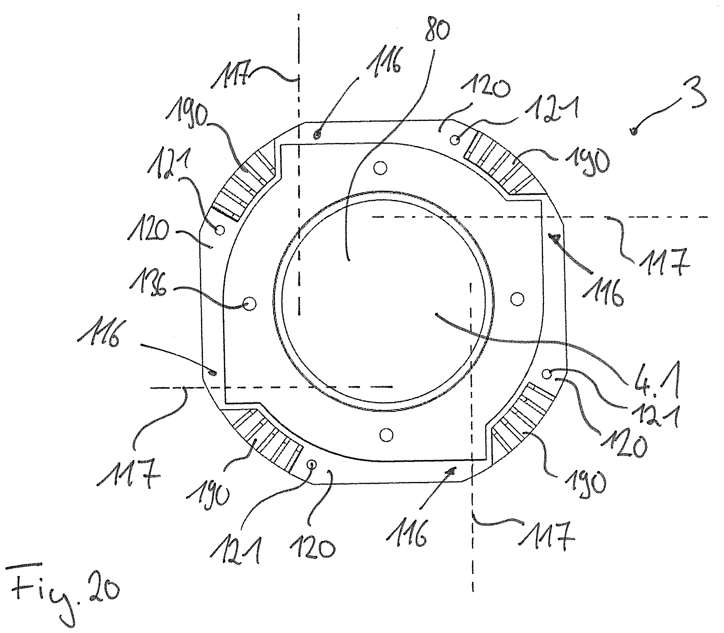

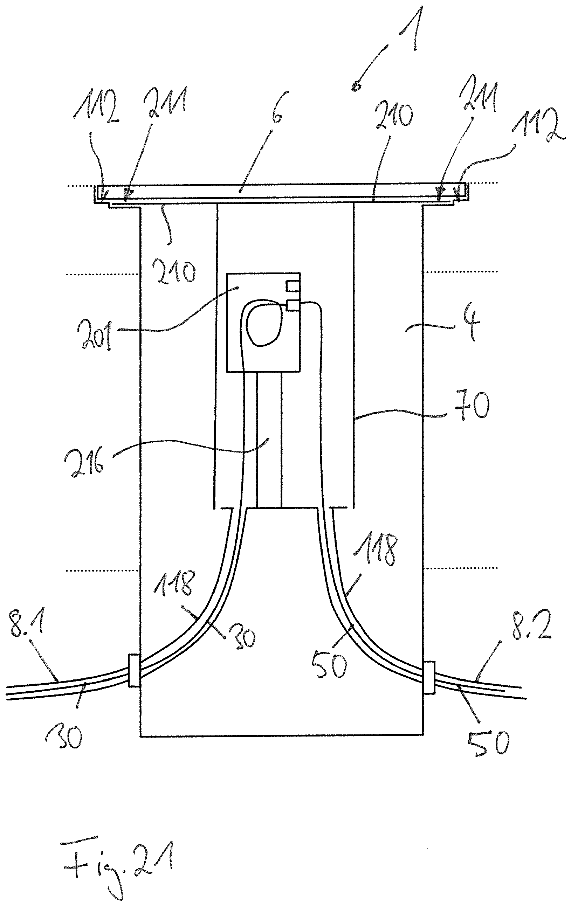

Figur 20 zeigt das Formteil 3 gemäß Figur 19 in einer Aufsicht, also von oben vertikal daraufblickend. Zur Illustration der Position der Löcher 116 sind die Mittenachsen 117 eingezeichnet, ist also gekennzeichnet, wie die Leerrohre dann in das Formteil 3 münden. Von der horizontalen, also waagrechten Orientierung abgesehen sind die Mittenachsen 117 auch zueinander versetzt, sie treffen sich also nicht mittig. Stattdessen münden die Leerrohre jeweils gewissermaßen tangential in den Innenraum 4.1 des Formteils 3. Dementsprechend behindern sich die eingeführten Datenkabel bzw. gehäuseinnenseitig angesetzten Leerrohre 118 (vergleiche auch Figur 21) weniger und lassen sich z. B. gut schleifenförmig ablegen.

Aus der Aufsicht gemäß Figur 20 ist ferner ersichtlich, dass der Flansch 120 und Standflächen 190 des Formteils 3 komplementär zueinander sind, was vorliegend eine Folge der Formwerkzeuggestaltung ist. Auch bei dem Formteil 3 gemäß den Figuren 19 und 20 ist die Bodenwand 80 mittig angehoben und sind Öffnungen 136 zum Abführen von Wasser vorgesehen.

Figur 21 zeigt eine Anschlussgehäusevorrichtung 1, bei welcher das Anschlussgehäuse 2 im Wesentlichen analog Figur 1 aufgebaut ist. Generell bezeichnen im Rahmen dieser Offenbarung dieselben Bezugszeichen Teile mit derselben oder vergleichbarer Funktion und wird insofern immer auch auf die Beschreibung zu den anderen Figuren verwiesen. Es ist ein Dichtbehälter 70 in dem Anschlussgehäuse 2 montiert, der eine Topfform hat, also einseitig offen ist. Der Dichtbehälter 70 ist an Vorsprüngen 210 aufgehängt, die an seinem oberen Ende angeordnet sind (im ortsfesten Koordinatensystem betrachtet, also am unteren Ende im Bezugssystem des Dichtbehälters). Die Vorsprünge 210 sitzen in Vertiefungen 211, sodass sie bündig in eine Anlagefläche 112 eingebettet sind. Auf dieser Anlagefläche 112 liegt der Deckel 6 des Anschlussgehäuses 2 auf, der somit zugleich die Vorsprünge 110 in den Vertiefungen 111 lagefixiert.

In den Dichtbehälter 70 ist ein damit verrastetes Ansetzteil 215 gesetzt, also in dessen offenes Ende. Dieses Ansetzteil 215 trägt ein Adapterteil 216, an dem ein Kabelgehäuse 201 montiert ist. Im Gehäuseinnenraum 4 sind die Datenkabel 30, 50 in Leerrohren 118, in diesem Fall in Wellrohren geführt. Diese sind mit einer Überlänge vorgesehen (nicht dargestellt), werden also bei eingesetztem Dichtbehälter 70 schleifenförmig in dem Gehäuseinnenraum 4 abgelegt und ermöglichen ein Herausnehmen des Dichtbehälters 70 mit daran befestigtem Ansetzteil 215 und Leerrohren 118.

## Patentansprüche

1. Verwendung einer Anschlussgehäusevorrichtung (1) zum Bereitstellen einer Datenkabelanbindung für eine Datennutzer- oder Datenverteilerstelle (16), und zwar einer Anbindung an eine Datenkabel-Verzweigungsstelle (24),
welche Anschlussgehäusevorrichtung (1) ein Anschlussgehäuse (2) aufweist, das einen Gehäuseinnenraum (4) begrenzt,
wobei der Gehäuseinnenraum (4) von oben über eine Öffnung (5) in dem Anschlussgehäuse (2) zugänglich ist,
und wobei das Anschlussgehäuse (2) eine Straßenkappe (140) aufweist, die zumindest einen oberen Abschnitt (4.2) des Gehäuseinnenraums (4) horizontal begrenzt und höhenverstellbar ist, also in ihrer vertikalen Erstreckung einstellbar ist,
bei welcher Verwendung das Anschlussgehäuse (2) solchermaßen in einen Boden eingebaut wird, dass der Gehäuseinnenraum (4) von oben über die Öffnung (5) in dem Anschlussgehäuse (2) zugänglich ist,
wobei ferner ein Datenkabel (30) oder ein Leerrohr (8.1-8.4) für ein Datenkabel (30) zwischen der Datenkabel-Verzweigungsstelle (24) und dem Anschlussgehäuse (2) verlegt wird, das also die Datenkabel-Verzweigungsstelle (24) mit dem Anschlussgehäuse (2) verbindet.

2. Verwendung nach Anspruch 1, bei welcher das Anschlussgehäuse (2) ein aus einem Kunststoffmaterial geformtes Formteil (3) mit einer Seitenwand (81) aufweist, die zumindest einen unteren Abschnitt (4.1) des Gehäuseinnenraums (4) horizontal begrenzt.

3. Verwendung nach Anspruch 1 oder 2, bei welcher ein Leerrohr (8.1-8.4) für ein Datenkabel (30) zwischen der Datenkabel-Verzweigungsstelle (24) und dem Anschlussgehäuse (2) verlegt wird, wobei die Anschlussgehäusevorrichtung (1) eine an dem Anschlussgehäuse (2) angeordnete Anschlussstelle (7.1-7.4) aufweist, an welche das Leerrohr (8.1-8.4) für ein Datenkabel (30) angesetzt wird, wobei die Anschlussstelle (7.1-7.4) vorzugsweise oberhalb eines unteren Endes des Gehäuseinnenraums (4) angeordnet ist.

4. Verwendung nach Anspruch 3, bei welcher die Anschlussstelle (7.1-7.4) solchermaßen schräg orientiert ist, dass eine Mittenachse (117) des angesetzten Leerrohres (8.1-8.4) im Bereich der Anschlussstelle (7.1-7.4) gewinkelt zu einer vertikalen Richtung (86) liegt.

5. Verwendung nach Anspruch 2 in Verbindung mit Anspruch 3 oder 4, bei welcher die Anschlussstelle (7.1-7.4) an dem Formteil (3) in einem Einbuchtungsbereich (110) angeordnet ist, in dem die Seitenwand (81) des Formteils (3) horizontal nach innen versetzt ist.

6. Verwendung nach einem der Ansprüche 3 bis 5, bei welcher ein Fitting (100) die Anschlussstelle (7.1-7.4) bildet, wobei das Fitting (100) an ein Loch (116) in dem Anschlussgehäuse an- oder in das Loch (116) eingesetzt ist.

7. Verwendung nach einem der Ansprüche 3 bis 6, wobei die Anschlussgehäusevorrichtung (1) mindestens zwei Anschlussstellen (7.1-7.4) aufweist, und wobei die mindestens zwei Anschlussstellen (7.1-7.4) solchermaßen orientiert sind, dass sich die Mittenachsen (117) jeweilig angesetzter Leerrohre (8.1-8.4) allenfalls dezentral im Gehäuseinnenraum (4) schneiden. 20

8. Verwendung nach einem der vorstehenden Ansprüche, bei welcher das Kabel (30) in dem Anschlussgehäuse (2) in einem Leerrohr (118) verlegt wird, das eine gewellte Außenwandfläche und/oder Spiralform hat.

9. Verwendung nach Anspruch 2, optional auch in Verbindung mit einem der Ansprüche 3 bis 8, bei welcher eine Bodenwand (80), die den Gehäuseinnenraum (4) nach vertikal unten begrenzt, und die Seitenwand (81) des Formteils (3) monolithisch miteinander geformt sind.

10. Verwendung nach Anspruch 9, bei welcher die Bodenwand (80) des Unterteils (3) mit einem Loch (136) versehen ist, durch welches in den Gehäuseinnenraum (4) eingedrungenes Wasser ablaufen kann.

11. Verwendung nach Anspruch 2, optional auch in Verbindung mit einem der Ansprüche 3 bis 10, bei welcher die Straßenkappe (140) auf das Formteil (3) aufgesetzt und damit verrastet ist.

12. Verwendung nach einem der Ansprüche, bei welcher die Öffnung (5) des Anschlussgehäuses (2) mit einem Deckel (6) verschlossen wird, wobei ein Dichtelement den Deckel (6) gegen das Anschlussgehäuse (2) dichtet, vorzugsweise eine eingelegte Dichtmatte.

13. Verwendung nach einem der vorstehenden Ansprüche, bei welcher die Öffnung (5) des Anschlussgehäuses (2) mit einem Deckel (6) verschlossen wird, wobei der Deckel (6) mittels einer selbstschneidenden Schraube an dem Anschlussgehäuse (2) verschraubt wird.

14. Kabelanbindungseinheit, die sich aus einer Verwendung nach einem der vorstehenden Ansprüche ergibt, mit
einer Anschlussgehäusevorrichtung (1), die ein Anschlussgehäuse (2) aufweist, das einen Gehäuseinnenraum (4) begrenzt,
wobei der Gehäuseinnenraum (4) von oben über eine Öffnung (5) in dem Anschlussgehäuse (2) zugänglich ist,
und wobei das Anschlussgehäuse (2) eine Straßenkappe (140) aufweist, die zumindest einen oberen Abschnitt (4.2) des Gehäuseinnenraums (4) horizontal begrenzt und höhenverstellbar ist, also in ihrer vertikalen Erstreckung einstellbar ist.
wobei das Anschlussgehäuse (2) zum Bereitstellen einer Datenkabelanbindung für eine Datennutzer- oder Datenverteilerstelle (16), und zwar einer Anbindung an eine Datenkabel-Verzweigungsstelle (24), zwischen der Datenkabel-Verzweigungsstelle (24) und der Datennutzer- oder Datenverteilerstelle (16) solchermaßen in einen Boden eingebaut ist, dass der Gehäuseinnenraum (4) von oben über die Öffnung (5) in dem Anschlussgehäuse (2) zugänglich ist,
wobei ferner ein Datenkabel (30) oder ein Leerrohr (8.1-8.4) für ein Datenkabel (30) zwischen der Datenkabel-Verzweigungsstelle (24) und dem Anschlussgehäuse (2) verlegt ist, das also die Datenkabel-Verzweigungsstelle (24) mit dem Anschlussgehäuse (2) verbindet.

## Claims

1. Use of a connection housing device (1) for providing a data cable connection for a data user or data distribution point (16), namely a connection to a data cable branching point (24),
which connection housing device (1) comprises a connection housing (2) which delimits a housing interior (4),
wherein the housing interior (4) is accessible from above via an opening (5) in the connection housing (2),
and wherein the connection housing (2) comprises a road cap (140) which delimits at least an upper section (4.2) of the housing interior (4) horizontally and is height-adjustable, i.e., is adjustable in its vertical extent,
in which use the connection housing (2) is installed in a ground such that the housing interior (4) is accessible from above via the opening (5) in the connection housing (2),
wherein further a data cable (30) or an empty conduit (8.1-8.4) for a data cable (30) is laid between the data cable branching point (24) and the connection housing (2), i.e., connects the data cable branching point (24) to the connection housing (2).

2. Use according to claim 1, in which the connection housing (2) comprises a molded part (3) with a side wall (81) molded from a plastic material which delimits at least a lower section (4.1) of the housing interior (4) horizontally.

3. Use according to claim 1 or 2, in which an empty conduit (8.1-8.4) for a data cable (30) is laid between the data cable branching point (24) and the connection housing (2), wherein the connection housing device (1) has a connection point (7.1-7.4) arranged on the connection housing (2), on which the empty conduit (8.1-8.4) for a data cable (30) is placed, wherein the connection point (7.1-7.4) is preferably arranged above a lower end of the housing interior (4).

4. Use according to claim 3, in which the connection point (7.1-7.4) is oriented obliquely such that a center axis (117) of the placed empty conduit (8.1-8.4) lies in the region of the connection point (7.1-7.4) angled to a vertical direction (86).

5. Use according to claim 2 in conjunction with claim 3 or 4, in which the connection point (7.1-7.4) is arranged on the molded part (3) in an indentation region (110) in which the side wall (81) of the molded part (3) is offset horizontally inwards.

6. Use according any of claims 3 to 5, in which a fitting (100) forms the connection point (7.1-7.4), wherein the fitting (100) is placed against a hole (116) in the connection housing or inserted into the hole (116).

7. Use according any of claims 3 to 6, wherein the connection housing device (1) has at least two connection points (7.1-7.4), and wherein the at least two connection points (7.1-7.4) are oriented such that the center axes (117) of respectively placed empty conduits (8.1-8.4) intersect at most decentrally in the housing interior (4).

8. Use according any of the preceding claims, in which the cable (30) is laid in the connection housing (2) in an empty conduit (118), which has a corrugated outer wall surface and/or spiral shape.

9. Use according to claim 2, optionally also in conjunction with one of claims 3 to 8, in which a base wall (80), which delimits the housing interior (4) vertically downwards, and the side wall (81) of the molded part (3) are molded mono-lithically with one another.

10. Use according to claim 9, in which the base wall (80) of the lower part (3) is provided with a hole (136) through which water penetrated into the housing interior (4) can drain.

11. Use according to claim 2, optionally also in conjunction with one of claims 3 to 10, in which the road cap (140) is placed on the molded part (3) and latched therewith.

12. Use according any of the preceding claims, in which the opening (5) of the connection housing (2) is closed with a lid (6), wherein a sealing element seals the lid (6) against the connection housing (2), preferably an inserted sealing mat.

13. Use according any of the preceding claims, in which the opening (5) of the connection housing (2) is closed with a lid (6), wherein the lid (6) is screwed to the connection housing (2) by means of a self-tapping screw.

14. Cable connection unit, which results from a use according any of the preceding claims, comprising
a connection housing device (1) which comprises a connection housing (2) which delimits a housing interior (4),
wherein the housing interior (4) is accessible from above via an opening (5) in the connection housing (2),
and wherein the connection housing (2) comprises a road cap (140) which delimits at least an upper section (4.2) of the housing interior (4) horizontally and is height-adjustable, i.e., is adjustable in its vertical extent,
wherein, for providing a data cable connection for a data user or data distribution point (16), namely a connection to a data cable branching point (24), the connection housing (2) is installed in a ground between the data cable branching point (24) and the data user or data distribution point (16) such that the housing interior (4) is accessible from above via the opening (5) in the connection housing (2),
wherein further a data cable (30) or an empty conduit (8.1-8.4) for a data cable (30) is laid between the data cable branching point (24) and the connection housing (2), i.e., connects the data cable branching point (24) to the connection housing (2).

## Revendications

1. Utilisation d'un dispositif à boîtier de raccordement (1) permettant de réaliser une connexion par câble de données pour un point d'utilisation ou de distribution de données (16), à savoir une connexion à un point de dérivation de câble de données (24),
lequel dispositif à boîtier de raccordement (1) présente un boîtier de raccordement (2) délimitant un intérieur de boîtier (4),
ledit intérieur de boîtier (4) étant accessible par le haut grâce à une ouverture (5) ménagée dans le boîtier de raccordement (2),
et ledit boîtier de raccordement (2) présentant un capuchon de voirie (140) qui délimite horizontalement au moins une partie supérieure (4.2) de l'intérieur de boîtier (4) et est réglable en hauteur, c'est-à-dire que son étendue verticale est modifiable,
dans le cadre de laquelle utilisation le boîtier de raccordement (2) est installé dans le sol de telle façon que l'intérieur de boîtier (4) est accessible par le haut grâce à l'ouverture (5) ménagée dans le boîtier de raccordement (2),
un câble de données (30) ou une gaine (8.1-8.4) pour câble de données (30) étant en outre posés entre le point de dérivation de câble de données (24) et le boîtier de raccordement (2), reliant ainsi le point de dérivation de câble de données (24) au boîtier de raccordement (2).

2. Utilisation selon la revendication 1, dans laquelle le boîtier de raccordement (2) présente une pièce moulée (3) en matière plastique dotée d'une paroi latérale (81) délimitant horizontalement au moins une partie inférieure (4.1) de l'intérieur de boîtier (4).

3. Utilisation selon la revendication 1 ou 2, dans laquelle une gaine (8.1-8.4) pour câble de données (30) est posée entre le point de dérivation de câble de données (24) et le boîtier de raccordement (2), ledit dispositif à boîtier de raccordement (1) présentant, sur le boîtier de raccordement (2), un point de raccordement (7.1-7.4) au niveau duquel est rapportée la gaine (8.1-8.4) pour câble de données (30), ledit point de raccordement (7.1-7.4) étant de préférence situé au-dessus d'une extrémité inférieure de l'intérieur de boîtier (4).

4. Utilisation selon la revendication 3, dans laquelle le point de raccordement (7.1-7.4) est orienté obliquement de telle façon qu'un axe central (117) de la gaine (8.1-8.4) rapportée est incliné par rapport à une direction verticale (86) dans la zone du point de raccordement (7.1-7.4).

5. Utilisation selon la revendication 2 prise conjointement avec la revendication 3 ou 4, dans laquelle le point de raccordement (7.1-7.4) présent sur la pièce moulée (3) est situé dans une zone de renfoncement (110) dans laquelle la paroi latérale (81) de la pièce moulée (3) est déportée horizontalement vers l'intérieur.

6. Utilisation selon l'une des revendications 3 à 5, dans laquelle un raccord (100) forme le point de raccordement (7.1-7.4), ledit raccord (100) étant rapporté au niveau d'un trou (116) du boîtier de raccordement ou introduit dans ledit trou (116).

7. Utilisation selon l'une des revendications 3 à 6, dans laquelle le dispositif à boîtier de raccordement (1) présente au moins deux points de raccordement (7.1-7.4), et dans laquelle les au moins deux points de raccordement (7.1-7.4) sont orientés de telle manière que les axes centraux (117) des gaines respectivement rapportées (8.1 -8.4) se coupent de manière tout juste décentrée dans ledit intérieur de boîtier (4).

8. Utilisation selon l'une des revendications précédentes, dans laquelle le câble (30) est posé dans le boîtier de raccordement (2) dans une gaine (118) dont la surface de paroi extérieure est ondulée et/ou en forme de spirale.

9. Utilisation selon la revendication 2, éventuellement aussi prise conjointement avec l'une des revendications 3 à 8, dans laquelle une paroi de fond (80), qui délimite l'intérieur de boîtier (4) dans son étendue verticale vers le bas, et la paroi latérale (81) de la pièce moulée (3) sont formées d'un seul tenant.

10. Utilisation selon la revendication 9, dans laquelle la paroi inférieure (80) de la pièce inférieure (3) est munie d'un trou (136) par lequel l'eau ayant pénétré dans ledit intérieur de boîtier (4) peut s'écouler.

11. Utilisation selon la revendication 2, éventuellement aussi prise conjointement avec l'une des revendications 3 à 10, dans laquelle le capuchon de voirie (140) est placé sur la pièce moulée (3) et solidarisé en s'encliquetant sur celle-ci.

12. Utilisation selon l'une des revendications précédentes, dans laquelle l'ouverture (5) du boîtier de raccordement (2) est fermée par un couvercle (6), un élément d'étanchéité assurant l'étanchéité entre le couvercle (6) et le boîtier de raccordement (2), de préférence un joint plat intercalé.

13. Utilisation selon l'une des revendications précédentes, dans laquelle l'ouverture (5) du boîtier de raccordement (2) est fermée par un couvercle (6), ledit couvercle (6) étant vissé au boîtier de raccordement (2) au moyen d'une vis autotaraudeuse.

14. Unité de connexion par câbles, découlant d'une utilisation selon l'une des revendications précédentes et comportant :
un dispositif à boîtier de raccordement (1) qui présente un boîtier de raccordement (2) délimitant un intérieur de boîtier (4),
ledit intérieur de boîtier (4) étant accessible par le haut grâce à une ouverture (5) ménagée dans le boîtier de raccordement (2),
et ledit boîtier de raccordement (2) présentant un capuchon de voirie (140) qui délimite horizontalement au moins une partie supérieure (4.2) de l'intérieur de boîtier (4) et est réglable en hauteur, c'est-à-dire que son étendue verticale est modifiable,
ledit boîtier de raccordement (2), qui permet de réaliser une connexion par câble de données pour un point d'utilisation ou de distribution de données (16), à savoir une connexion à un point de dérivation de câble de données (24), est installé dans le sol, entre le point de dérivation de câble de données (24) et le point d'utilisation ou de distribution de données (16), de telle façon que l'intérieur de boîtier (4) est accessible par le haut grâce à l'ouverture (5) ménagée dans le boîtier de raccordement (2),
un câble de données (30) ou une gaine (8.1-8.4) pour câble de données (30) étant en outre posés entre le point de dérivation de câble de données (24) et le boîtier de raccordement (2), reliant ainsi le point de dérivation de câble de données.
